# EUROPEAN PATENT APPLICATION

(11) **EP 4 340 278 A1**
(43) Date of publication of application: **20.03.2024**
(21) Application number: 22806602.3
(22) Date of filing: 06.05.2022
(51) Int. Cl.: H04L 5/00, H04L 1/00

(54) **SIGNAL TRANSMISSION METHOD AND APPARATUS, TERMINAL, AND BASE STATION**

(30) Priority: 11.05.2021 CN 202110512806
(71) Applicant: Datang Mobile Communications Equipment Co., Ltd., Beijing 100085 (CN)
(72) Inventor: HUANG, Qiuping, Beijing 100085 (CN); SU, Xin, Beijing 100085 (CN); GAO, Qiubin, Beijing 100085 (CN)
(74) Representative: Studio Torta S.p.A.
(86) International application number: PCT/CN2022/091143
(87) International publication number: WO 2022/237636

(57) **Abstract**

The present disclosure provides a signal transmission method and apparatus, a terminal and a base station. The method includes: obtaining indication information; determining a transmission mode of PUSCH according to the indication information; where the transmission mode includes a first transmission mode and/or a second transmission mode, and the first transmission mode and the second transmission mode have different first characteristics; according to the transmission mode, determining a first parameter and/or a second parameter corresponding to the transmission mode; where the first transmission mode is corresponding to the first parameter, and the second transmission mode is corresponding to the second parameter; and transmitting the PUSCH according to the first parameter and/or the second parameter; where the first parameter is different from the second parameter.

## Description

### CROSS-REFERENCE TO RELATED APPLICATION

The present disclosure claims the priority of Chinese Application No. 202110512806.9, filed on May 11, 2021, the disclosure of which is incorporated in its entirety by reference herein.

### TECHNICAL FIELD

The present disclosure relates to the field of wireless technologies, and in particular to a signal transmission method and apparatus, a terminal and a base station.

### BACKGROUND

When a base station configures a physical uplink shared channel (PUSCH) transmission of a UE as multi-transmission and reception points (M-TRP) transmission, whether the PUSCH is actually transmitted to one TRP or two TRPs can be dynamically switched through downlink control information (DCI) signaling. One indication way is to use a special information field in a DCI signaling for scheduling the PUSCH to indicate whether the PUSCH is a single-transmission and reception point (S-TRP) transmission or multiple TRP transmission, and indicates which TRP to transmit to in case of S-TRP transmission.

When PUSCH is configured for M-TRP transmission, the base station can configure for the UE, two sounding reference signal (SRS) resource sets for obtaining channel state information (CSI) of PUSCH, and each set is corresponding to one TRP. The DCI for scheduling the PUSCH may include two sounding reference signal resource indication (SRI) fields and two transmission precoding information indication (TPMI) fields.

If a dedicated information field in the DCI is used to indicate which TRP or TRPs the PUSCH is to be transmitted, at least 2 bits of overhead will be required when transmitting to 2 TRPs, and PDCCH overhead will affect a decoding performance of PDCCH; the smaller the overhead of DCI, the better.

In the related art, multi-panel transmission of the UE is not supported. If the UE exchanges with the base station whether the UE performs single panel transmission or multi-antenna panel transmission and/or sends PUSCH transmission indication information for each panel of the UE, it will help to improve uplink transmission performance.

### SUMMARY

Embodiments of the present disclosure provide a signal transmission method and apparatus, a terminal and a base station, which can solve the problem of indicating which TRP or TRPs a PUSCH is transmitted to, and/or indicating which panel or which panels of a UE transmit the PUSCH, in the related art,.

One embodiment of the present disclosure provides a signal transmission method applied to a terminal, including:
obtaining indication information;
determining a transmission mode of physical uplink shared channel (PUSCH) according to the indication information; wherein the transmission mode includes a first transmission mode and/or a second transmission mode;
determining a first parameter and/or a second parameter corresponding to the transmission mode according to the transmission mode; wherein the first transmission mode is corresponding to the first parameter, and the second transmission mode is corresponding to the second parameter; and
transmitting the PUSCH according to the first parameter and/or the second parameter.

Optionally, a first characteristic of the first transmission mode and/or the second transmission mode is a characteristic associated with one or more of the following: a transmission node, a sounding reference signal (SRS) resource set, spatial- related information, a power control parameter, an SRI field in control information for scheduling the PUSCH, a TPMI field in the control information for scheduling the PUSCH, a terminal antenna panel, and a power control parameter set; and/or,
a first characteristic of the first transmission mode and/or the second transmission mode is a characteristic associated with the number of one or more of the following: a transmission node, a sounding reference signal (SRS) resource set, a spatial-related parameter, a power control parameter and a power control parameter set.

Optionally, the determining a first parameter and/or a second parameter corresponding to the transmission mode according to the transmission mode, includes at least one of the following:
determining the first parameter and/or the second parameter according to a first information field in the control information for scheduling the PUSCH;
determining the first parameter according to the indication information.

Optionally, the determining the first parameter and/or the second parameter according to a first information field in the control information for scheduling the PUSCH, includes at least one of the following:
determining the first parameter according to a state from N states of one first information field in the control information; wherein N is an integer greater than or equal to 2;
determining the second parameter according to at least one first information field in the control information.

Optionally, when determining the first parameter according to a state from N states of one first information field in the control information, the method further includes:
determining the first parameter according to a specified first information field in the control information which includes at least two first information fields, and determining the second parameter according to another first information field other than the specified first information field in the control information which includes at least two first information fields.

Optionally, the determining a first parameter and/or a second parameter corresponding to the transmission mode according to the transmission mode, includes at least one of the following:
in case that the transmission mode is the first transmission mode, determining the first parameter according to a specified first information field in the first information field; or,
in case that the transmission mode is the second transmission mode, determining the second parameter according to a specified first information field in the first information field.

Optionally, the method further includes:
in case of meeting a first condition, determining the first parameter according to a first information field in the control information for scheduling the PUSCH;
wherein the first condition includes one or more of the following:
the control information for scheduling the PUSCH includes a specified first information field;
a bit width of the specified first information field in the control information for scheduling the PUSCH is non-zero;
the control information for scheduling the PUSCH includes at least two first information fields;
the number of SRS resources included in a specified SRS resource set is greater than 1;
the transmission mode of the PUSCH is at least corresponding to multiple SRS resource sets, and the number of SRS resources included in at least two SRS resource sets in the multiple SRS resource sets is greater than 1;
the number of antenna ports of at least one SRS resource in the specified SRS resource set is greater than 1;
the transmission mode of the PUSCH is at least corresponding to multiple SRS resource sets, and at least two SRS resource sets in the multiple SRS resource sets satisfy the following condition: the number of antenna ports of at least one SRS resource is greater than 1.

Optionally, the method further includes:
in case of meeting a second condition, determining the first parameter according to the indication information;
wherein the second condition includes one or more of the following:
the control information for scheduling the PUSCH does not include a first information field;
the control information for scheduling the PUSCH does not include a specified first information field;
the control information for scheduling the PUSCH includes a specified first information field and a bit width of the specified first information field is zero;
the control information for scheduling the PUSCH includes only one first information field with a non-zero bit width;
the control information for scheduling the PUSCH includes a first information field and a bit width of the first information field is zero;
the number of SRS resources included in a specified SRS resource set is equal to 1;
the number of SRS resources included in all SRS resource sets corresponding to the PUSCH transmission mode is equal to 1;
the number of antenna ports of all SRS resources in the specified SRS resource set is equal to 1;
the number of antenna ports of all SRS resources in all SRS resource sets corresponding to the PUSCH transmission mode is equal to 1.

Optionally, in case that the control information includes only one first information field with the non-zero bit width, the method further includes:
determining the second parameter according to the first information field with the non-zero bit width.

Optionally, the specified first information field is any of the following:
M-th first information field; wherein M is a specified value;
a first information field with the minimum bit width among at least two first information fields;
a first information field with the maximum bit width among at least two first information fields;
only one first information field included in the control information for scheduling the PUSCH.

Optionally, the method further includes at least one of the following:
in case that the transmission mode is the first transmission mode and the number of SRS resources included in the SRS resource set associated with the specified first information field is 1, determining a bit width of the specified first information field as non-zero;
in case that the transmission mode is the second transmission mode and the number of antenna ports of all SRS resources in the SRS resource set associated with the specified first information field is 1, determining a bit width of the specified first information field as non-zero.

Optionally, the obtaining indication information, includes at least one of the following:
obtaining the indication information according to a second information field in the control information for scheduling the PUSCH;
obtaining the indication information according to radio resource control (RRC) signaling; or,
obtaining the indication information according to media access control (MAC) signaling.

Optionally, the first parameter includes one or more of the following: a transmission node, an SRS resource, an SRS resource set, a power control parameter, a power control parameter set and spatial-related information corresponding to the PUSCH transmission; and/or,
the second parameter includes one or more of the following: an SRS resource, an SRS resource set, a power control parameter, a power control parameter set, spatial-related information, precoding information and number of transmission layers.

One embodiment of the present disclosure further provides a signal transmission method applied to a base station, including:
transmitting indication information to a terminal; wherein the indication information is used to indicate a transmission mode of physical uplink shared channel PUSCH; wherein the transmission mode includes a first transmission mode and/or a second transmission mode; and
indicating a first parameter and/or a second parameter to the terminal through a first information field in control information for scheduling the PUSCH; wherein the first transmission mode is corresponding to the first parameter, and the second transmission mode is corresponding to the second parameter.

Optionally, a first characteristic of the first transmission mode and/or the second transmission mode is a characteristic associated with one or more of the following: a transmission node, a sounding reference signal (SRS) resource set, spatial- related information, a power control parameter, an SRI field in control information for scheduling the PUSCH, a TPMI field in the control information for scheduling the PUSCH, a terminal antenna panel, and a power control parameter set; and/or,
a first characteristic of the first transmission mode and/or the second transmission mode is a characteristic associated with the number of one or more of the following: a transmission node, a sounding reference signal (SRS) resource set, a spatial-related parameter, a power control parameter and a power control parameter set.

Optionally, the indicating a first parameter and/or a second parameter to the terminal through a first information field in control information for scheduling the PUSCH, includes at least one of the following:
indicating the first parameter through a state of N states of one first information field in the control information; wherein N is an integer greater than or equal to 2;
indicating the second parameter through at least one first information field in the control information.

Optionally, when indicating the first parameter through a state of N states of one first information field in the control information, the method further includes:
indicating the first parameter by a specified first information field in the control information which includes at least two first information fields, and indicating the second parameter by another first information field other than the specified first information field in the control information which includes at least two first information fields.

Optionally, the method further includes at least one of the following:
in case that the transmission mode is the first transmission mode, indicating the first parameter through a specified first information field in the control information for scheduling the PUSCH;
in case that the transmission mode is the second transmission mode, indicating the second parameter through a specified first information field in the control information for scheduling the PUSCH.

Optionally, the method further includes:
indicating the first parameter by the first information field in the control information for scheduling the PUSCH when a first condition is met;
wherein the first condition includes one or more of the following:
the control information for scheduling the PUSCH includes a specified first information field;
a bit width of the specified first information field in the control information for scheduling the PUSCH is non-zero;
the control information for scheduling the PUSCH includes at least two first information fields;
the number of SRS resources included in a specified SRS resource set is greater than 1;
the transmission mode of the PUSCH is at least corresponding to multiple SRS resource sets, and the number of SRS resources included in at least two SRS resource sets in the multiple SRS resource sets is greater than 1;
the number of antenna ports of at least one SRS resource in the specified SRS resource set is greater than 1;
the transmission mode of the PUSCH is at least corresponding to multiple SRS resource sets, and at least two SRS resource sets in the multiple SRS resource sets satisfy the following condition: the number of antenna ports of at least one SRS resource is greater than 1.

Optionally, the method further includes:
indicating the first parameter through the indication information when a second condition is met;
wherein the second condition includes one or more of the following:
the control information for scheduling the PUSCH does not include a first information field;
the control information for scheduling the PUSCH does not include a specified first information field;
the control information for scheduling the PUSCH includes a specified first information field and a bit width of the specified first information field is zero;
the control information for scheduling the PUSCH includes only one first information field with a non-zero bit width;
the control information for scheduling the PUSCH includes a first information field and a bit width of the first information field is zero;
the number of SRS resources included in a specified SRS resource set is equal to 1;
the number of SRS resources included in all SRS resource sets corresponding to the PUSCH transmission mode is equal to 1;
the number of antenna ports of all SRS resources in the specified SRS resource set is equal to 1;
the number of antenna ports of all SRS resources in all SRS resource sets corresponding to the PUSCH transmission mode is equal to 1.

Optionally, in the case that the control information includes only one first information field with a non-zero bit width, the method further includes:
indicating the second parameter by the first information field with the non-zero bit width.

Optionally, the specified first information field is any of the following:
M-th first information field; wherein M is a specified value;
a first information field with the minimum bit width among at least two first information fields;
a first information field with the maximum bit width among at least two first information fields;
only one first information field included in the control information for scheduling the PUSCH.

Optionally, the method further includes at least one of the following:
in case that the transmission mode is the first transmission mode and the number of SRS resources included in the SRS resource set associated with the specified first information field is 1, determining a bit width of the specified first information field as non-zero;
in case that the transmission mode is the second transmission mode and the number of antenna ports of all SRS resources in the SRS resource set associated with the specified first information field is 1, determining a bit width of the specified first information field as non-zero.

Optionally, the transmitting indication information, includes at least one of the following:
transmitting the indication information through a second information field in the control information for scheduling the PUSCH;
transmitting the indication information through radio resource control (RRC) signaling;
transmitting the indication information through medium access control (MAC) signaling.

Optionally, the first parameter includes one or more of the following: a transmission node, an SRS resource, an SRS resource set, a power control parameter, a power control parameter set and spatial-related information corresponding to the PUSCH transmission; and/or,
the second parameter includes one or more of the following: an SRS resource, an SRS resource set, a power control parameter, a power control parameter set, spatial-related information, precoding information and number of transmission layers.

One embodiment of the present disclosure further provides a terminal, including: a memory, a transceiver and a processor;
wherein the memory is used to store a computer program; the transceiver is used to receive and transmit data under control of the processor; the processor is used to read the computer program in the memory and perform the following steps:
obtaining indication information;
determining a transmission mode of physical uplink shared channel (PUSCH) according to the indication information; wherein the transmission mode includes a first transmission mode and/or a second transmission mode;
determining a first parameter and/or a second parameter corresponding to the transmission mode according to the transmission mode; wherein the first transmission mode is corresponding to the first parameter, and the second transmission mode is corresponding to the second parameter; and
transmitting the PUSCH according to the first parameter and/or the second parameter.

Optionally, a first characteristic of the first transmission mode and/or the second transmission mode is a characteristic associated with one or more of the following: a transmission node, a sounding reference signal (SRS) resource set, spatial- related information, a power control parameter, an SRI field in control information for scheduling the PUSCH, a TPMI field in the control information for scheduling the PUSCH, a terminal antenna panel, and a power control parameter set; and/or,
a first characteristic of the first transmission mode and/or the second transmission mode is a characteristic associated with the number of one or more of the following: a transmission node, a sounding reference signal (SRS) resource set, a spatial-related parameter, a power control parameter and a power control parameter set.

Optionally, when determining a first parameter and/or a second parameter corresponding to the transmission mode according to the transmission mode, the processor is used to perform at least one of the following:
determining the first parameter and/or the second parameter according to a first information field in the control information for scheduling the PUSCH;
determining the first parameter according to the indication information.

Optionally, when determining the first parameter and/or the second parameter according to a first information field in the control information for scheduling the PUSCH, the processor is used to perform at least one of the following:
determining the first parameter according to a state from N states of one first information field in the control information; wherein N is an integer greater than or equal to 2;
determining the second parameter according to at least one first information field in the control information.

Optionally, when determining the first parameter according to a state from N states of one first information field in the control information, the processor is further used to perform:
determining the first parameter according to a specified first information field in the control information which includes at least two first information fields, and determining the second parameter according to another first information field other than the specified first information field in the control information which includes at least two first information fields.

Optionally, when determining a first parameter and/or a second parameter corresponding to the transmission mode according to the transmission mode, the processor is used to perform at least one of the following:
in case that the transmission mode is the first transmission mode, determining the first parameter according to a specified first information field in the first information field; or,
in case that the transmission mode is the second transmission mode, determining the second parameter according to a specified first information field in the first information field.

Optionally, the processor is used to perform:
in case of meeting a first condition, determining the first parameter according to a first information field in the control information for scheduling the PUSCH;
wherein the first condition includes one or more of the following:
the control information for scheduling the PUSCH includes a specified first information field;
a bit width of the specified first information field in the control information for scheduling the PUSCH is non-zero;
the control information for scheduling the PUSCH includes at least two first information fields;
the number of SRS resources included in a specified SRS resource set is greater than 1;
the transmission mode of the PUSCH is at least corresponding to multiple SRS resource sets, and the number of SRS resources included in at least two SRS resource sets in the multiple SRS resource sets is greater than 1;
the number of antenna ports of at least one SRS resource in the specified SRS resource set is greater than 1;
the transmission mode of the PUSCH is at least corresponding to multiple SRS resource sets, and at least two SRS resource sets in the multiple SRS resource sets satisfy the following condition: the number of antenna ports of at least one SRS resource is greater than 1.

Optionally, the processor is used to perform:
in case of meeting a second condition, determining the first parameter according to the indication information;
wherein the second condition includes one or more of the following:
the control information for scheduling the PUSCH does not include a first information field;
the control information for scheduling the PUSCH does not include a specified first information field;
the control information for scheduling the PUSCH includes a specified first information field and a bit width of the specified first information field is zero;
the control information for scheduling the PUSCH includes only one first information field with a non-zero bit width;
the control information for scheduling the PUSCH includes a first information field and a bit width of the first information field is zero;
the number of SRS resources included in a specified SRS resource set is equal to 1;
the number of SRS resources included in all SRS resource sets corresponding to the PUSCH transmission mode is equal to 1;
the number of antenna ports of all SRS resources in the specified SRS resource set is equal to 1;
the number of antenna ports of all SRS resources in all SRS resource sets corresponding to the PUSCH transmission mode is equal to 1.

Optionally, in case that the control information includes only one first information field with the non-zero bit width, the processor is used to perform:
determining the second parameter according to the first information field with the non-zero bit width.

Optionally, the specified first information field is any of the following:
M-th first information field; wherein M is a specified value;
a first information field with the minimum bit width among at least two first information fields;
a first information field with the maximum bit width among at least two first information fields;
only one first information field included in the control information for scheduling the PUSCH.

Optionally, the processor is further used to perform at least one of the following:
in case that the transmission mode is the first transmission mode and the number of SRS resources included in the SRS resource set associated with the specified first information field is 1, determining a bit width of the specified first information field as non-zero;
in case that the transmission mode is the second transmission mode and the number of antenna ports of all SRS resources in the SRS resource set associated with the specified first information field is 1, determining a bit width of the specified first information field as non-zero.

Optionally, when the obtaining indication information, the processor is used to perform at least one of the following:
obtaining the indication information according to a second information field in the control information for scheduling the PUSCH;
obtaining the indication information according to radio resource control (RRC) signaling; or,
obtaining the indication information according to media access control (MAC) signaling.

Optionally, the first parameter includes one or more of the following: a transmission node, an SRS resource, an SRS resource set, a power control parameter, a power control parameter set and spatial-related information corresponding to the PUSCH transmission; and/or,
the second parameter includes one or more of the following: an SRS resource, an SRS resource set, a power control parameter, a power control parameter set, spatial-related information, precoding information and number of transmission layers.

One embodiment of the present disclosure further provides a base station, including: a memory, a transceiver and a processor;
wherein the memory is used to store a computer program; the transceiver is used to receive and transmit data under control of the processor; the processor is used to read the computer program in the memory and perform the following steps:
transmitting indication information to a terminal; wherein the indication information is used to indicate a transmission mode of physical uplink shared channel PUSCH;
wherein the transmission mode includes a first transmission mode and/or a second transmission mode; and
a first parameter and/or a second parameter is indicated to the terminal through a first information field in control information for scheduling the PUSCH; wherein the first transmission mode is corresponding to the first parameter, and the second transmission mode is corresponding to the second parameter.

Optionally, a first characteristic of the first transmission mode and/or the second transmission mode is a characteristic associated with one or more of the following: a transmission node, a sounding reference signal (SRS) resource set, spatial- related information, a power control parameter, an SRI field in control information for scheduling the PUSCH, a TPMI field in the control information for scheduling the PUSCH, a terminal antenna panel, and a power control parameter set; and/or,
a first characteristic of the first transmission mode and/or the second transmission mode is a characteristic associated with the number of one or more of the following: a transmission node, a sounding reference signal (SRS) resource set, a spatial-related parameter, a power control parameter and a power control parameter set.

Optionally, when indicating a first parameter and/or a second parameter to the terminal through a first information field in control information for scheduling the PUSCH, the processor is used to perform at least one of the following:
indicating the first parameter through a state of N states of one first information field in the control information; wherein N is an integer greater than or equal to 2;
indicating the second parameter through at least one first information field in the control information.

Optionally, when indicating the first parameter through a state of N states of one first information field in the control information, the processor is used to perform at least one of the following:
indicating the first parameter by a specified first information field in the control information which includes at least two first information fields, and indicating the second parameter by another first information field other than the specified first information field in the control information which includes at least two first information fields.

Optionally, the processor is further used to perform at least one of the following:
in case that the transmission mode is the first transmission mode, indicating the first parameter through a specified first information field in the control information for scheduling the PUSCH;
in case that the transmission mode is the second transmission mode, indicating the second parameter through a specified first information field in the control information for scheduling the PUSCH.

Optionally, the processor is further used to perform:
indicating the first parameter by the first information field in the control information for scheduling the PUSCH when a first condition is met;
wherein the first condition includes one or more of the following:
the control information for scheduling the PUSCH includes a specified first information field;
a bit width of the specified first information field in the control information for scheduling the PUSCH is non-zero;
the control information for scheduling the PUSCH includes at least two first information fields;
the number of SRS resources included in a specified SRS resource set is greater than 1;
the transmission mode of the PUSCH is at least corresponding to multiple SRS resource sets, and the number of SRS resources included in at least two SRS resource sets in the multiple SRS resource sets is greater than 1;
the number of antenna ports of at least one SRS resource in the specified SRS resource set is greater than 1;
the transmission mode of the PUSCH is at least corresponding to multiple SRS resource sets, and at least two SRS resource sets in the multiple SRS resource sets satisfy the following condition: the number of antenna ports of at least one SRS resource is greater than 1.

Optionally, the processor is further used to perform:
indicating the first parameter through the indication information when a second condition is met;
wherein the second condition includes one or more of the following:
the control information for scheduling the PUSCH does not include a first information field;
the control information for scheduling the PUSCH does not include a specified first information field;
the control information for scheduling the PUSCH includes a specified first information field and a bit width of the specified first information field is zero;
the control information for scheduling the PUSCH includes only one first information field with a non-zero bit width;
the control information for scheduling the PUSCH includes a first information field and a bit width of the first information field is zero;
the number of SRS resources included in a specified SRS resource set is equal to 1;
the number of SRS resources included in all SRS resource sets corresponding to the PUSCH transmission mode is equal to 1;
the number of antenna ports of all SRS resources in the specified SRS resource set is equal to 1;
the number of antenna ports of all SRS resources in all SRS resource sets corresponding to the PUSCH transmission mode is equal to 1.

Optionally, in the case that the control information includes only one first information field with a non-zero bit width, the processor is further used to perform:
indicating the second parameter by the first information field with the non-zero bit width.

Optionally, the specified first information field is any of the following:
M-th first information field; wherein M is a specified value;
a first information field with the minimum bit width among at least two first information fields;
a first information field with the maximum bit width among at least two first information fields;
only one first information field included in the control information for scheduling the PUSCH.

Optionally, the processor is further used to perform at least one of the following:
in case that the transmission mode is the first transmission mode and the number of SRS resources included in the SRS resource set associated with the specified first information field is 1, determining a bit width of the specified first information field as non-zero;
in case that the transmission mode is the second transmission mode and the number of antenna ports of all SRS resources in the SRS resource set associated with the specified first information field is 1, determining a bit width of the specified first information field as non-zero.

Optionally, when transmitting indication information, the processor is used to perform at least one of the following:
transmitting the indication information through a second information field in the control information for scheduling the PUSCH;
transmitting the indication information through radio resource control (RRC) signaling;
transmitting the indication information through medium access control (MAC) signaling.

Optionally, the first parameter includes one or more of the following: a transmission node, an SRS resource, an SRS resource set, a power control parameter, a power control parameter set and spatial-related information corresponding to the PUSCH transmission; and/or,
the second parameter includes one or more of the following: an SRS resource, an SRS resource set, a power control parameter, a power control parameter set, spatial-related information, precoding information and number of transmission layers.

One embodiment of the present disclosure provides a signal transmission apparatus applied to a terminal, including:
an information obtaining unit configured to obtain indication information;
a first determining unit configured to determine a transmission mode of physical uplink shared channel (PUSCH) according to the indication information; wherein the transmission mode includes a first transmission mode and/or a second transmission mode;
a second determining unit configured to determine a first parameter and/or a second parameter corresponding to the transmission mode according to the transmission mode; wherein the first transmission mode is corresponding to the first parameter, and the second transmission mode is corresponding to the second parameter; and
a transmission unit configured to transmit the PUSCH according to the first parameter and/or the second parameter.

One embodiment of the present disclosure provides a signal transmission apparatus applied to a base station, including:
a transmission unit configured to transmit indication information to a terminal; wherein the indication information is used to indicate a transmission mode of physical uplink shared channel PUSCH;
wherein the transmission mode includes a first transmission mode and/or a second transmission mode; and
a first parameter and/or a second parameter is indicated to the terminal through a first information field in control information for scheduling the PUSCH; wherein the first transmission mode is corresponding to the first parameter, and the second transmission mode is corresponding to the second parameter.

One embodiment of the present disclosure provides a computer-readable storage medium, including: a computer program stored thereon; wherein the computer program is used to cause a computer to execute the foregoing signal transmission method.

The beneficial effects of the present disclosure are as follows.

According to the signal transmission method in the embodiment of the present disclosure, in a multi-TRP scenario or a terminal multi-panel scenario, a first parameter (such as corresponding TRP or panel) and/or a second parameter (such as uplink scheduling information) corresponding to the PUSCH transmission can be determined based on the PUSCH transmission mode (such as the number of corresponding TRPs or panels), thereby determining different parameters under different transmission modes and saving the overhead of parameter indication. In addition, compared with the related art, decoding performance of PDCCH can be improved.

### BRIEF DESCRIPTION OF THE DRAWINGS

In order to illustrate technical solutions according to embodiments of the present disclosure or the related art more clearly, drawings to be used in the description of the embodiments or the related art will be described briefly hereinafter. Apparently, the drawings described hereinafter are only some embodiments of the present disclosure, and other drawings may be obtained by those skilled in the art according to those drawings without creative work.
FIG. 1 shows a schematic diagram of a network system applicable to an embodiment of the present disclosure;
FIG. 2 is a schematic flow chart of one implementation of a signal transmission method according to an embodiment of the present disclosure;
FIG. 3 is a schematic flow chart of another implementation of a signal transmission method according to an embodiment of the present disclosure;
FIG. 4 is a schematic diagram of a terminal according to an embodiment of the present disclosure;
FIG. 5 is a schematic diagram of a base station according to an embodiment of the present disclosure;
FIG. 6 is a schematic diagram of one implementation of a signal transmission apparatus according to an embodiment of the present disclosure; and
FIG. 7 is a schematic diagram of another implementation of a signal transmission apparatus according to an embodiment of the present disclosure.

### DETAILED DESCRIPTION

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

The terms such as "first", "second" in the specification and claims of the present disclosure are used to distinguish similar objects, and are not necessarily used to describe a specific order or sequence. It is to be understood that data so used may be interchanged under appropriate circumstances such that the embodiments of the disclosure described herein are implemented, for example, in sequences other than those illustrated or described herein. Furthermore, the terms such as "comprising" and "having" as well as any variations thereof, are intended to cover a non-exclusive inclusion, for example, a process, method, system, product or apparatus including a sequence of steps or units is not necessarily limited to those steps or units that are expressly listed, but may include other steps or units that are not expressly listed or inherent to the process, method, product or apparatus.

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "j" generally means that relationship between associated objects before and after the character "/" is "or". The term "plurality" in the embodiments of the present disclosure means two or more, and other quantifiers are similar.

In the embodiments of the present disclosure, the words such as "exemplary" or "for example" are used to mean an example, illustration or explanation. Any embodiment or design described as "exemplary" or "for example" in the embodiments of the present disclosure shall not be construed as being more optional or more advantageous than other embodiments or designs. Rather, the use of words such as "exemplary" or "for example" is intended to present related concepts in a concrete manner.

Embodiments of the present disclosure are described hereinafter with reference to the accompanying drawings. The mode indication method, terminal device and network device provided in the embodiments of the present disclosure can be applied in a wireless communication system. The wireless communication system may be a system using the fifth generation (5G) mobile communication technology (hereinafter referred to as 5G system). Those skilled in the art can understand that the 5G NR system is only an example and not a limitation.

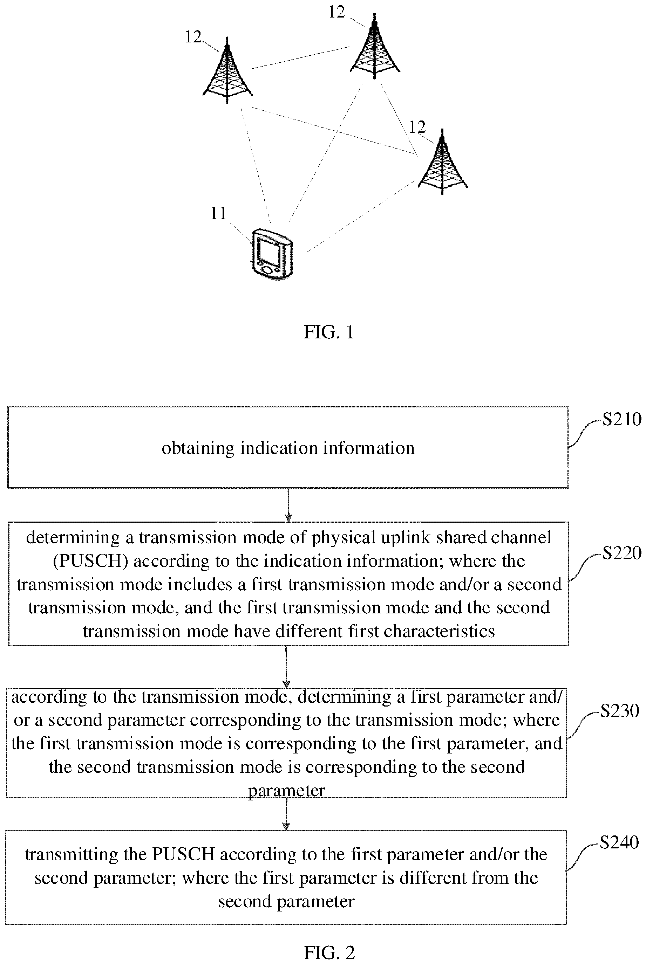

Referring to FIG. 1, FIG. 1 is a schematic diagram of a network system applicable to an embodiment of the present disclosure. As shown in FIG. 1, the network system includes a user terminal 11 and a base station. The base station may include one or more TRPs 12 (the user terminal may include one or more antenna panels). The user terminal 11 may be a user equipment (UE), such as a mobile phone, a tablet personal computer, a laptop computer, a personal digital assistant (PDA for short), a mobile internet device (MID) or a wearable device and other terminal-side devices. It is to be noted that the specific type of the user terminal 11 is not limited in the embodiments of the present disclosure. The above TRP 12 may be a base station of 5G and later versions (such as gNB, 5G NR NB), or a base station in other communication systems, or called Node B.

In order to solve the problem of indicating which TRP or TRPs a PUSCH is transmitted to, and/or indicating which panel or which panels of a UE transmit the PUSCH, in the related art, an embodiment of the present disclosure provides a signal transmission method, which uses a dedicated indication information to indicate a PUSCH transmission mode, and can determine parameters of corresponding PUSCH transmission based on the indicated indication information and the indicated transmission mode. In this way, in a multi-TRP scenario or a terminal multi-panel scenario, a first parameter (such as corresponding TRP or panel) and/or a second parameter (such as uplink scheduling information) corresponding to the PUSCH transmission can be determined based on the PUSCH transmission mode (such as the number of corresponding TRPs or panels), thereby determining different parameters under different transmission modes and saving the overhead of parameter indication. In addition, compared with the related art, decoding performance of PDCCH can be improved.

As shown in FIG. 2, a signal transmission method according to one embodiment of the present disclosure is applied to a terminal and includes:
S210: obtaining indication information;
S220: determining a transmission mode of physical uplink shared channel (PUSCH) according to the indication information; where the transmission mode includes a first transmission mode and/or a second transmission mode, and the first transmission mode and the second transmission mode have different first characteristics;
S230: according to the transmission mode, determining a first parameter and/or a second parameter corresponding to the transmission mode; where the first transmission mode is corresponding to the first parameter, and the second transmission mode is corresponding to the second parameter;
S240: transmitting the PUSCH according to the first parameter and/or the second parameter; where the first parameter is different from the second parameter.

In the embodiment of the present disclosure, optionally, the transmission mode determined according to the indication information may be single-panel (S-panel) transmission for the terminal and/or, multiple-panel (M-panel) transmission for the terminal. For example, the first transmission mode may be S-panel transmission, and the second transmission mode may be M-panel transmission.

According to another implementation manner, in the embodiment of the present disclosure, optionally, the transmission mode determined according to the indication information may be S-TRP transmission and/or M-TRP transmission. For example, the first transmission mode may be S-TRP transmission, and the second transmission mode may be M-TRP transmission.

Optionally, the first transmission mode may be a transmission mode including one or more of the following first characteristics:
the number of transmit beams or spatial-related information corresponding to the PUSCH transmission is 1;
the PUSCH transmission is associated with one SRS resource set;
the PUSCH transmission is only corresponding to one SRI field;
the PUSCH transmission is only corresponding to one TPMI field;
the number of valid TPMI fields in DCI is 1;
the number of valid SRI fields in the DCI is 1;
the PUSCH transmission is associated with one set of power control parameters;
the PUSCH transmission is associated with one first power control parameter;
the PUSCH transmission is associated with one terminal panel.

Optionally, the PUSCH transmission being associated with one SRS resource set, means that the number of SRS resource sets used to determine precoding and/or antenna port of the PUSCH transmission is 1.

Optionally, the PUSCH transmission being corresponding to only one SRI field, means that the number of SRI fields used to determine precoding and/or antenna port of the PUSCH transmission is 1.

Optionally, the PUSCH transmission being corresponding to only one TPMI field, means that the number of TPMI field used to determine precoding and/or the number of transmission layers of the PUSCH transmission is 1.

Optionally, the number of valid TPMI fields in DCI being 1, means that the number of TPMI fields in the DCI for determining precoding and/or the number of transmission layers of the PUSCH transmission is 1.

Optionally, the number of valid SRI fields in the DCI being 1, means that the number of SRI fields in the DCI used to determine precoding and/or antenna port of the PUSCH transmission is 1.

Optionally, the PUSCH transmission being associated with one power control parameter set, means that the number of power control parameter sets used to determine a transmission power of the PUSCH is 1.

Optionally, the PUSCH transmission being associated with one first power control parameter, means that the number of first power control parameter used to determine the transmission power of the PUSCH is 1.

Optionally, the PUSCH transmission being associated with one terminal panel, means that the number of terminal panels used to transmit the PUSCH is 1.

The first transmission mode may be a transmission mode including any one of the above first characteristics, or a transmission method including a combination of any at least two or more of the above first characteristics.

One power control parameter set may include one or more of the following: a parameter indicating path loss reference signal and a parameter indicating target reception power of PUSCH transmission, and may further include some other power control parameters.

Optionally, the spatial-related information is related information used to indicate a spatial filtering parameter corresponding to the PUSCH transmission. Optionally, the information is information related to reference signals. For example, the spatial-related information is indication information of a reference signal, and is used to indicate the terminal to determine a spatial filtering parameter according to the reference signal.

In some embodiments of the present disclosure, the first transmission mode corresponding to S-TRP transmission is taken as an example for illustration, and the method may be extended to a situation where the first transmission mode is corresponding to one or more of the above first characteristics, a situation where the second transmission mode is corresponding to S-TRP transmission, a situation where the second transmission mode is corresponding to one or more of the above first characteristics, a situation where the first transmission mode is corresponding to S-TRP transmission, and a situation where the second transmission mode is corresponding to S-TRP transmission.

Optionally, the second transmission mode may be a transmission mode including one or more of the following first characteristics:
the PUSCH transmission is associated with two SRS resource sets;
the PUSCH transmission is associated with multiple SRS resource sets;
the PUSCH transmission is associated with two power control parameter sets;
the PUSCH transmission is associated with multiple power control parameter sets;
the PUSCH transmission is corresponding to two SRI fields;
the PUSCH transmission is corresponding to multiple SRI fields;
the PUSCH transmission is corresponding to two TPMI fields;
the PUSCH transmission is corresponding multiple TPMI fields;
the PUSCH transmission is corresponding to two transmit beams or spatial-related information;
the PUSCH transmission is corresponding to multiple transmit beams or spatial-related information;
the number of valid TPMI fields in the DCI is 2;
the number of valid SRI fields in the DCI is 2;
the number of valid TPMI fields in the DCI is greater than 1;
the number of valid SRI fields in the DCI is greater than 1;
the PUSCH transmission is associated with multiple power control parameter sets;
the PUSCH transmission is associated with two power control parameter sets;
the PUSCH transmission is associated with two terminal panels;
the PUSCH transmission is associated with multiple terminal panels.

Optionally, the PUSCH transmission being associated with two/multiple SRS resource sets, means that the number of SRS resource sets used to determine precoding and/or antenna port of the PUSCH transmission is two/multiple.

Optionally, the PUSCH transmission being corresponding to two/multiple SRI fields, means that the number of SRI fields used to determine the precoding and/or antenna port of the PUSCH transmission is two/multiple.

Optionally, the PUSCH transmission being corresponding to two/multiple TPMI fields, means that the number of TPMI fields used to determine the precoding and/or the number of transmission layers of the PUSCH transmission is two/multiple.

Optionally, the number of valid TPMI fields in the DCI being 2/greater than 1, means that the number of TPMI fields in the DCI used to determine the precoding and/or the number of transmission layers of the PUSCH transmission is two/multiple.

Optionally, the number of valid SRI fields in the DCI being 2/greater than 1, means that the number of SRI fields in the DCI used to determine the precoding and/or antenna port of the PUSCH transmission is 2/greater than 1.

Optionally, the PUSCH transmission being associated with 2/multiple power control parameter sets, means that the number of power control parameter sets used to determine the transmission power of the PUSCH is 2/multiple.

Optionally, the PUSCH transmission being associated with 2/multiple first power control parameters, means that the number of first power control parameters used to determine the transmission power of the PUSCH is 2/multiple.

Optionally, the PUSCH transmission being associated with 2/multiple terminal panels, means that the number of terminal panels used to transmit the PUSCH is 2/multiple.

In some embodiments of the present disclosure, the second transmission mode corresponding to M-TRP transmission is taken as an example for illustration, and the method may be extended to a situation where the second transmission mode is corresponding to one or more of the above first characteristics, a situation where the first transmission mode is corresponding to M-TRP transmission, a situation where the first transmission mode is corresponding to one or more of the above first characteristics, a situation where the first transmission mode is corresponding to M-panel transmission, and a situation where the second transmission mode is corresponding to M-panel transmission.

Based on the above, in the embodiments of the present disclosure, optionally, the first characteristic of the first transmission mode is different from that of the second transmission mode.

Optionally, the first characteristic of the first transmission mode and/or the second transmission mode is a characteristic associated with one or more of the following: a transmission node (i.e., TRP), a sounding reference signal (SRS) resource set, spatial- related information, a power control parameter, an SRI field in control information for scheduling PUSCH, a TPMI field in the control information for scheduling the PUSCH, a terminal antenna panel, and a power control parameter set; and/or, the first characteristic of the first transmission mode and/or the second transmission mode is a characteristic associated with the number of one or more of the following: a transmission node, a sounding reference signal (SRS) resource set, a spatial-related parameter, a power control parameter and a power control parameter set.

For example, in the first transmission mode such as S-TRP transmission, one or more of the following: the number of transmission nodes (i.e., TRP) associated with the PUSCH, the number of sounding reference signal (SRS) resource sets associated with the PUSCH, the number of spatial-related information associated with the PUSCH, the number of power control parameters associated with the PUSCH, and the number of power control parameter sets associated with the PUSCH, are 1, respectively.

In the second transmission mode such as M-TRP transmission, one or more of the following: the number of transmission nodes associated with the PUSCH, the number of sounding reference signal (SRS) resource sets associated with the PUSCH, the number of spatial-related information associated with the PUSCH, the number of power control parameters associated with the PUSCH, and the number of power control parameter sets associated with the PUSCH, are greater than 1 (for example, 2), respectively.

Specifically, the node, SRS resource set, spatial-related information, power control parameter and power control parameter set associated with the PUSCH refer to a node, SRS resource set, spatial-related information, power control parameter and power control parameter set corresponding to the PUSCH transmission, respectively.

In the signal transmission method according to the embodiment of the present disclosure, optionally, the first parameter includes one or more of the following: the transmission node, SRS resource, SRS resource set, power control parameter, power control parameter set and spatial-related information corresponding to the PUSCH transmission.

Optionally, the second parameter includes one or more of the following: SRS resource, SRS resource set, power control parameter, power control parameter set, spatial-related information, precoding information and number of transmission layers.

Optionally, when the transmission modes of the PUSCH are different, the second parameters are different. For example, when the transmission mode of the PUSCH is a codebook-based transmission mode, the second parameter is precoding information; when the transmission mode of the PUSCH is a codebook-based transmission mode, the second parameter is an SRS resource indication.

Optionally, the first parameter includes at least one of the following:
a TRP corresponding to the PUSCH transmission;
the number of transmit beams or spatial-related information corresponding to the PUSCH transmission;
an SRS resource set associated with the PUSCH transmission;
an SRI field corresponding to the PUSCH transmission;
a TPMI field corresponding to the PUSCH transmission;
a valid TPMI field in the DCI;
a valid SRI field in the DCI;
a power control parameter set associated with the PUSCH transmission;
a first power control parameter associated with the PUSCH transmission;
a terminal panel associated with the PUSCH transmission.

Optionally, the SRS resource set associated with the PUSCH transmission refers to an SRS resource set used to determine precoding and/or antenna port of the PUSCH transmission.

Optionally, the SRI field corresponding to the PUSCH transmission refers to an SRI field used to determine precoding and/or antenna port of the PUSCH transmission.

Optionally, the TPMI field corresponding to the PUSCH transmission refers to a TPMI field used to determine precoding and/or the number of transmission layers of the PUSCH transmission.

Optionally, the valid TPMI field in the DCI refers to a TPMI field in the DCI used to determine the precoding and/or the number of transmission layers of the PUSCH transmission.

Optionally, the valid SRI field in the DCI refers to an SRI field in the DCI used to determine the precoding and/or antenna port of the PUSCH transmission.

Optionally, the power control parameter set associated with PUSCH transmission refers to a power control parameter set used to determine a transmission power of the PUSCH.

Optionally, the first power control parameter associated with the PUSCH transmission refers to a first power control parameter used to determine a transmission power of the PUSCH.

Optionally, the terminal panel associated with the PUSCH transmission refers to a terminal panel used to transmit the PUSCH.

Optionally, the second parameter includes one or more of the following:
precoding of the PUSCH transmission;
the number of transmission layers of the PUSCH transmission;
an SRS resource used to determine precoding corresponding to the PUSCH transmission;
a power control parameter to determine a transmission power of the PUSCH;
a power control parameter set to determine a transmission power of the PUSCH;
spatial-relation information used to determine a spatial filter/spatial filter coefficient of the PUSCH;
a power control parameter set used to determine a transmission power of the PUSCH;
an SRS resource set used to determine precoding corresponding to the PUSCH transmission.

Optionally, in this embodiment of the present disclosure, whether the PUSCH transmission is an S-TRP transmission or an M-TRP transmission can be determined by using one piece of indication information, and the first parameter and/or the second parameter including the above content can be determined by using the indication information and/or the indicated transmission mode of PUSCH transmission as S-TRP transmission or M-TRP transmission, where the first parameter is different from the second parameter.

Optionally, the obtaining indication information in the step S210, includes:
obtaining the indication information according to a second information field in control information for scheduling the PUSCH;
obtaining the indication information according to radio resource control (RRC) signaling; or,
obtaining the indication information according to media access control (MAC) signaling.

Optionally, the control information includes but is not limited to only including downlink control information (DCI).

In this embodiment, optionally, when the control information includes DCI for scheduling the PUSCH, the second information field is a dedicated information field.

Optionally, in this embodiment, the indication information is used to indicate one or more of the following information:
the number of TRPs corresponding to the PUSCH transmission;
the number of transmission beams or the number of spatial-related information corresponding to the PUSCH transmission;
the number of SRS resource sets associated with the PUSCH transmission;
the number of SRI fields corresponding to the PUSCH transmission;
the number of TPMI fields corresponding to the PUSCH transmission;
the number of valid TPMI fields in the DCI;
the number of valid SRI fields in the DCI;
the number of power control parameter sets associated with the PUSCH transmission;
the number of first power control parameters associated with the PUSCH transmission;
the number of terminal panels associated with the PUSCH transmission.

Optionally, in this embodiment, the indication information can be used to indicate the first parameter in addition to indicating the transmission mode of the PUSCH. For example, through the indication information used to indicate the transmission mode of PUSCH, in addition to obtaining whether the PUSCH transmission is S-TRP transmission or M-TRP transmission, the corresponding first parameter can also be determined, such as determining one or more of the following: the transmission node, SRS resource, SRS resource set, power control parameter, power control parameter set and spatial-related information corresponding to the PUSCH transmission.

For example, the second information field is an information field used to indicate a TRP corresponding to the PUSCH transmission or an information field used to indicate the number of TRPs corresponding to the PUSCH transmission. For example, in case that the second information field indicates the TRP corresponding to the PUSCH transmission, optionally, the second information field is a 2-bit information field. One possible encoding is as follows:

| state | TRP corresponding to PUSCH transmission |
|---|---|
| 1 | TRP 1, TRP 2 |
| 2 | TRP 1 |
| 3 | TRP 2 |

For example, in case that the second information field is a field indicating the number of TRPs corresponding to the PUSCH transmission, optionally, the second information field is a 1-bit information field. One possible encoding is as follows:

| state | number of TRPs corresponding to PUSCH transmission |
|---|---|
| 1 | 1 |
| 2 | 2 |

The foregoing example is described by taking the terminal communicating with two TRPs as an example. It is to be understood that this method can be extended to a scenario of more TRPs.

In this embodiment of the present disclosure, optionally, in the step S230, according to the transmission mode, determining a first parameter and/or a second parameter corresponding to the transmission mode, includes at least one of the following:
determining the first parameter and/or the second parameter according to a first information field in control information for scheduling the PUSCH;
determining the first parameter according to the indication information.

In this step, the control information includes, but is not limited to, downlink control information (DCI) for scheduling only PUSCH.

In this embodiment, optionally, when the control information includes DCI for scheduling the PUSCH, the first information field may include or be the SRI field and/or the TPMI field in the DCI.

Optionally, determining the second parameter according to the first information field of the control information for scheduling the PUSCH, includes any of the following:
the first information field of the control information for scheduling the PUSCH is in one-to-one correspondence with TRPs corresponding to the PUSCH transmission;
the first information field of the control information for scheduling the PUSCH is in one-to-one correspondence with SRS resource sets corresponding to the PUSCH transmission;
the first information field of the control information for scheduling the PUSCH is in one-to-one correspondence with power control parameters corresponding to the PUSCH transmission;
in case that the first information field is not an SRI field, the first information field of the control information for scheduling the PUSCH is in one-to-one correspondence with the SRI fields corresponding to the PUSCH transmission;
in case that the first information field is not an SRI field, the first information field of the control information for scheduling the PUSCH is in one-to-one correspondence with the TPMI fields corresponding to the PUSCH transmission;
the first information field of the control information for scheduling the PUSCH is in one-to-one correspondence with transmission beams or spatial related information corresponding to the PUSCH transmission;
the first information field of the control information for scheduling the PUSCH is in one-to-one correspondence with power control parameter sets corresponding to the PUSCH transmission;
the first information field of the control information for scheduling the PUSCH is in one-to-one correspondence with panels corresponding to the PUSCH transmission.

It is to be understood that the TPMI field is a field used to indicate precoding information, and different communication systems may have different description ways. For example, in the NR system, precoding information and number of layers fields, or precoding information indicator field, may be used. The TPMI field may also have different description modes in different versions of the same communication system.

The SRI field is a field used to indicate an SRS resource and/or SRS resource set, and different communication systems may have different indication manners. For example, in the NR system, an SRS resource indicator field may be used to indicate SRS resources. The SRI field may also have different description modes in different versions of the same communication system.

Optionally, one implementation manner is that, according to the indication information, the transmission mode of the PUSCH (for example, the first transmission mode or the second transmission mode) is determined; based on the transmission mode of the PUSCH, the first parameter and/or the second parameter is determined according to the first information field in the control information for scheduling the PUSCH. For example, one implementation manner is that the terminal determines whether the PUSCH transmission is S-TRP transmission or M-TRP transmission according to the indication information; based on whether the PUSCH is S-TRP transmission or M-TRP transmission, the terminal determines the first parameter and/or the second parameter according to the first information field in the control information for scheduling the PUSCH. By taking the first information field being an SRI field as an example, assuming that the indication information indicates that the transmission of the PUSCH is the first transmission mode (for example, S-TRP transmission), and the DCI includes multiple SRI fields, one way is that: the UE determines a TRP (the first parameter) corresponding to the PUSCH transmission according to a second SRI field, and the UE determines an SRS resource (the second parameter) corresponding to the PUSCH transmission according to a first SRI field. Still taking the first information field being the SRI field as an example, assuming that the indication information indicates that the transmission of the PUSCH is the second transmission mode (for example, M-TRP transmission), the DCI includes multiple SRI fields, one way is that: the UE determines an SRS resource (second parameter) corresponding to each of the two TRPs corresponding to the PUSCH transmission based on multiple SRI fields.

Optionally, determining the first parameter according to the indication information, includes: simultaneously indicating, by the indication information, the transmission mode of the PUSCH and the first parameter. For example, taking the first parameter being the transmission node corresponding to the PUSCH transmission as an example, the indication information may indicate the transmission mode and transmission node corresponding to the PUSCH transmission in the following 2-bit encoding manner:

| state | TRP corresponding to the PUSCH transmission |
|---|---|
| 1 | TRP 1, TRP 2 |
| 2 | TRP 1 |
| 3 | TRP 2 |

In this embodiment of the present disclosure, optionally, the first information field and the second information field may be the same information field, or may be different information fields.

With this embodiment, the above transmission mode and the corresponding first parameter and/or second parameter can be determined only by adding one bit of information. Compared with related art, overhead of PDCCH can be reduced, thereby avoiding the overhead of PDCCH from affecting decoding performance of the PDCCH.

It is to be noted that, in the embodiment of the present disclosure, in case of determining the first parameter and/or the second parameter according to the first information field in the control information for scheduling the PUSCH, the indication information used to determine the transmission mode is different from the first information field used to determine the first parameter and/or the second parameter.

In one embodiment, optionally, determining the first parameter and/or the second parameter according to the first information field in the control information for scheduling the PUSCH, includes at least one of the following:
determining the first parameter according to states of N states of one first information field in the control information; where N is an integer greater than or equal to 2;
determining the second parameter according to at least one first information field in the control information.

Optionally, a value of N is the same as the number of TRPs corresponding to the PUSCH transmission. Optionally, the N states are corresponding to the TRPs in a one-to-one manner. The TRP here may be a TRP toward which the PUSCH is able to be transmitted, and is not necessarily a TRP corresponding to an actual transmission of the PUSCH.

Optionally, a value of N is the same as the number of spatial-related information corresponding to the PUSCH transmission. Optionally, the N states are in one-to-one correspondence with the spatial-related information. The spatial-related information here may be spatial-related information allowed to be used for the PUSCH transmission, and is not necessarily spatial-related information for determining spatial filtering parameters of actual transmission of the PUSCH.

Optionally, a value of N is the same as the number of SRS resource sets corresponding to the PUSCH transmission. Optionally, the N states are in one-to-one correspondence with the SRS resource sets. The SRS resource set corresponding to the PUSCH transmission here may be an SRS resource set configured for the PUSCH transmission by RRC signaling, and is not necessarily an SRS resource set for determining an antenna port for the PUSCH transmission.

Optionally, a value of N is the same as the number of power control parameters corresponding to the PUSCH transmission. Optionally, the N states is corresponding to the power control parameters in a one-to-one manner. The power control parameter corresponding to the PUSCH transmission here may be a power control parameter configured for PUSCH transmission by RRC signaling, and is not necessarily a power control parameter for determining a transmission power of the PUSCH transmission.

Optionally, a value of N is the same as the number of power control parameter sets corresponding to the PUSCH transmission. Optionally, the N states are in one-to-one correspondence with the power control parameter sets. The power control parameter set corresponding to the PUSCH transmission here may be a power control parameter set configured by RRC signaling for PUSCH transmission, and is not necessarily a power control parameter set for determining the transmission power of the PUSCH transmission.

Optionally, a value of N is the same as the number of panels corresponding to the PUSCH transmission. Optionally, the N states are corresponding to the panels in a one-to-one manner. The panel corresponding to the PUSCH transmission here may be a panel that can be used by the terminal, and is not necessarily a panel used for an actual PUSCH transmission.

Optionally, when the first information field is not an SRI field, a value of N is the same as the number of SRI fields corresponding to the PUSCH transmission. Optionally, the N states are corresponding to the SRI fields in a one-to-one manner. The SRI field corresponding to the PUSCH transmission here may be an SRI field included in the DCI, and is not necessarily an SRI field corresponding to the actual PUSCH transmission.

Optionally, the power control parameter is a parameter related to a path loss reference signal and the like.

Optionally, in case of determining the first parameter according to states of N states of one first information field in the control information, the first parameter is determined according to the first N states of one first information field in the control information.

Optionally, in case of determining the first parameter according to states of N states of one first information field in the control information, the first parameter is determined according to the last N states of one first information field in the control information.

Optionally, in case of determining the first parameter according to states of N states of one first information field in the control information, the first parameter is determined according to the middle N states of one first information field in the control information.

Optionally, in case of determining the second parameter according to at least one first information field in the control information, the second parameter is determined according to at least two first information fields in the control information; where in the at least two first information fields, different first information fields are corresponding to different transmission nodes, spatial-relation information, SRS resource sets, power control parameters, and power control parameter sets.

An illustration is given hereinafter, based on the following example in which the PUSCH transmission mode determined according to the indication information is S-TRP transmission or M-TRP, that is, the first transmission mode is S-TRP transmission, the second transmission mode is M-TRP transmission, and the first information field includes an SRI field and/or TPMI field.

In one embodiment, optionally, in case that the PUSCH transmission mode is determined as the first transmission mode (for example, S-TRP transmission) according to the indication information, the first N states of one SRI field in the control information for scheduling the PUSCH, are used to indicate the transmission node (the first parameter) corresponding to the PUSCH transmission (that is, according to one of the SRI fields, the transmission node corresponding to the PUSCH transmission is determined).

In case that the PUSCH transmission mode is determined as the second transmission mode (for example, M-TRP transmission) according to the indication information, at least one SRI field (first information field) in the control information for scheduling the PUSCH, is used to indicate an SRS resource (the second parameter) corresponding to the PUSCH; that is, the SRS resource corresponding to the PUSCH is determined according to at least one SRI field. Optionally, when the control information for scheduling the PUSCH includes at least two first information fields, i.e., at least two SRI fields, the at least two SRI fields are respectively used to indicate the SRS resources corresponding to the PUSCH; and each SRI field has a preset association relationship with different transmission nodes or SRS resource sets, etc. respectively. For example, a first SRI field in the control information indicates an SRS resource corresponding to a first transmission node, and a second SRI field indicates an SRS resource corresponding to a second transmission node.

Therefore, in this embodiment, in case that the transmission mode of PUSCH is the second transmission mode, corresponding second parameters can be determined respectively according to at least two first information fields in the control information. Different first information fields are corresponding to different second parameters.

Optionally, in case of determining the first parameter according to states of the N states of one first information field in the control information, the method further includes:
determining the first parameter according to a specified first information field in the control information which includes at least two first information fields, and determining the second parameter according to another first information field other than the specified first information field in the control information which includes at least two first information fields.

For example, in the above embodiment, in case that the transmission mode of the PUSCH is determined as the first transmission mode (for example, S-TRP transmission) according to the indication information, the first N states of one SRI field (first information field) in the control information for scheduling the PUSCH, are used to indicate the transmission node (the first parameter) corresponding to the PUSCH transmission; that is, according to one of the SRI fields, the transmission node corresponding to the PUSCH transmission is determined. Further, optionally, another SRI field (first information field) in the control information indicates an SRS resource (that is, the second parameter) corresponding to the transmission node indicated by the one SRI field. That is, according to another SRI field, the SRS resource (that is, the second parameter) corresponding to the transmission node indicated by the one SRI field, is determined.

For example, one SRI field in the control information is a second SRI field in the control information, and is used to indicate the transmission node corresponding to the PUSCH transmission; and another SRI field in the control information is the first SRI field in the control information, and is used to indicate the SRS resource corresponding to the transmission node indicated by the second SRI field.

The SRI field used to indicate the transmission node (first parameter) corresponding to the PUSCH transmission is not limited to only the second SRI field. In this embodiment, indicating the first parameter through the second SRI field is only an example and is not limited to this. In addition, it is to be noted that the SRI field used to indicate the transmission node (first parameter) corresponding to the PUSCH transmission may be a specified SRI field, such as an SRI field agreed in accordance with the protocol.

Therefore, by using at least two SRI fields in the control information, the transmission node corresponding to the PUSCH transmission can be determined according to the second SRI field, and the SRS resource corresponding to the transmission node indicated by the second SRI field can be determined according to the first SRI field.

In another embodiment, optionally, in case that the PUSCH transmission mode is determined as the first transmission mode, i.e., S-TRP transmission, according to the indication information, the first N states of one TPMI field (first information field) in the control information for scheduling the PUSCH, are used to indicate the transmission node (the first parameter) corresponding to the PUSCH transmission. That is, according to one of the TPMI fields, the transmission node corresponding to the PUSCH transmission is determined.

Optionally, the one TPMI field in the control information is a second TPMI field in the control information, and is used to indicate the transmission node corresponding to the PUSCH transmission. A first TPMI field in the control information is used to indicate precoding information and/or transmission layers (the second parameter) corresponding to the transmission node indicated by the second TPMI field. Therefore, the UE can determine the first parameter (transmission node) according to one of the at least two first information fields (TPMI fields) in the control information, and determine the second parameter (precoding information and/or number of transmission layers) according to the other first information field (TPMI field).

In case that the PUSCH transmission mode is determined as the second transmission mode, i.e., M-TRP transmission, according to the indication information, at least one TPMI field (first information field) in the control information for scheduling the PUSCH, is used to indicate precoding information (second parameter) corresponding to the PUSCH; that is, the precoding information corresponding to the PUSCH is determined according to at least one TPMI field. Optionally, in case that the control information for scheduling the PUSCH includes at least two first information fields, i.e., at least two TPMI fields, the at least two TPMI fields are respectively used to indicate the precoding information corresponding to the PUSCH, and each TPMI field has a preset association relationship with different transmission nodes or SRS resource sets. For example, a first TPMI field in the control information indicates precoding information corresponding to a first transmission node, and a second TPMI field indicates precoding information corresponding to a second transmission node.

In the embodiment of the present disclosure, in the step S230, determining the first parameter and/or the second parameter according to the transmission mode, includes at least one of the following:
in case that the transmission mode is the first transmission mode, determining the first parameter according to a specified first information field in the first information field;
in case that the transmission mode is the second transmission mode, determining the second parameter according to a specified first information field in the first information field.

According to the signal transmission method in the embodiment of the present disclosure, by adopting this implementation mode, in case that the PUSCH transmission modes determined according to the indication information are different, the specified first information field in the first information field is used to indicate different parameters. As another example, in the above embodiment, in case that the transmission mode is S-TRP transmission (the first transmission mode), the specified SRI field (the first information field) is used to indicate the transmission node (the first parameter) corresponding to the PUSCH transmission; in case that the transmission mode is M-TRP transmission (the second transmission mode), the specified SRI field (the first information field) is used to indicate the SRS resource (the second parameter) corresponding to the PUSCH transmission.

In various embodiments of the present disclosure, on the basis of determining the transmission mode of the PUSCH according to the indication information, a coding mode and/or indicated content of the first information field in the control information for scheduling the PUSCH can be further determined according to the transmission mode.

Optionally, in case that the transmission mode is the first transmission mode, the coding mode of the specified first information field in the control information for scheduling the PUSCH is a first coding mode; in case that the transmission mode is the second transmission mode, the coding mode of the specified first information field in the control information for scheduling the PUSCH is a second coding mode.

Optionally, in case that the transmission mode is the first transmission mode, the specified first information field in the control information for scheduling the PUSCH is used to indicate a first parameter; in case that the transmission mode is the second transmission mode, the specified first information field in the control information for scheduling the PUSCH is used to indicate the second parameter.

Optionally, in case that the transmission mode is the first transmission mode, the specified first information field in the control information for scheduling the PUSCH is used to indicate the first parameter and a first encoding mode; in case that the mode is the second transmission mode, the specified first information field in the control information for scheduling the PUSCH is used to indicate the second parameter and a second encoding mode.

Optionally, in case that the specified first information field in the control information for scheduling the PUSCH is used to indicate the second parameter, the first information field in the control information for scheduling the PUSCH has a one-to-one correspondence with the TRP corresponding to the PUSCH transmission.

An example is as follows: assuming that UE is a UE with non-coherent transmission capability, for a codebook-based 4-antenna port PUSCH transmission, assuming that the PUSCH transmission is limited to a maximum number of transmission layers of 1, and assuming that the indication information is indicated by the second information field in the DCI for scheduling the PUSCH, a first parameter is indicated by a second TPMI field (first information field) in the DCI for scheduling the PUSCH. In case that the indication information indicates that the transmission mode of PUSCH is the first transmission mode, the first information field (the second TPMI field) is used to indicate precoding information (second parameter) corresponding to the second SRI field of the PUSCH, and an encoding manner is as follows:

| Bit field mapped to index | codebookSubset=nonCoherent |
|---|---|
| 0 | 1 layer: TPMI=0 |
| 1 | 1 layer: TPMI=1 |
| ... | ... |
| 3 | 1 layer: TPMI=3 |

In case that the indication information indicates that the PUSCH transmission mode is the second transmission mode, the first information field (the second TPMI field) is used to indicate that TRP (first parameter) is corresponding to the PUSCH transmission, and an encoding manner is as follows:

| Bit field mapped to index | codebookSubset=nonCoherent |
|---|---|
| 0 | TRP 1 |
| 1 | TRP 2 |
| 2-3 | reserved |

According to the signal transmission method in the embodiments of the present disclosure, based on determining the transmission mode of PUSCH transmission in the above embodiments and determining the first parameter corresponding to the transmission mode and/or the second parameter corresponding to the PUSCH transmission according to the transmission mode, the method further includes:
in case of meeting a first condition, determining the first parameter according to the first information field in the control information for scheduling the PUSCH.

The first condition includes one or more of the following:
the control information for scheduling the PUSCH includes the specified first information field;
a bit width of the specified first information field in the control information for scheduling the PUSCH is non-zero;
the control information for scheduling the PUSCH includes at least two first information fields;
the number of SRS resources included in a specified SRS resource set is greater than 1;
the transmission mode of the PUSCH is at least corresponding to multiple SRS resource sets, and the number of SRS resources included in at least two SRS resource sets in the multiple SRS resource sets is greater than 1;
the number of antenna ports of at least one SRS resource in the specified SRS resource set is greater than 1;
the transmission mode of the PUSCH is at least corresponding to multiple SRS resource sets, and at least two SRS resource sets in the multiple SRS resource sets satisfy the following condition: the number of antenna ports of at least one SRS resource is greater than 1.

Optionally, the method further includes:
in case of meeting a second condition, determining the first parameter according to the indication information.

The second condition includes one or more of the following:
the control information for scheduling the PUSCH does not include a first information field;
the control information for scheduling the PUSCH does not include a specified first information field;
the control information for scheduling the PUSCH includes a specified first information field and a bit width of the specified first information field is zero;
the control information for scheduling the PUSCH only includes a first information field with a non-zero bit width;
the control information for scheduling the PUSCH includes a first information field and a bit width of the first information field is zero;
the number of SRS resources included in the specified SRS resource set is equal to 1;
the number of SRS resources included in all SRS resource sets corresponding to the PUSCH transmission mode is equal to 1;
the number of antenna ports of all SRS resources in the specified SRS resource set is equal to 1;
the number of antenna ports of all SRS resources in all SRS resource sets corresponding to the PUSCH transmission mode is equal to 1.

In the signal transmission method of the embodiment of the present disclosure, according to the above first condition and/or second condition, whether the first parameter or the second parameter is obtained according to the first information field in the control information for scheduling PUSCH, is determined by judging the condition satisfied by the first information field.

For example, in one implementation mode, the first information field being the SRI field is taken as an example.

In case that the PUSCH is S-TRP transmission, the first parameter is determined according to the condition satisfied by the SRI field in the control information, for example, according to the number of SRI fields.

Optionally, when the SRI field is not included in the control information, or the number of SRS resources included in the SRS resource set corresponding to the PUSCH is 1 (that is, when the second condition is met), the indication information indicating the transmission mode of the PUSCH, further indicates the first parameter.

The indication information includes the following three states:
a state indicating that the PUSCH transmission is M-TRP transmission;
a state indicating that the PUSCH transmission is an S-TRP transmission and corresponding to a first TRP (first parameter);
a state indicating that the PUSCH transmission is S-TRP transmission and corresponding to a second TRP (first parameter).

Therefore, according to the indication information, the transmission mode of the PUSCH and the corresponding first parameter can be determined.

Optionally, when the specified SRI field is not included in the control information, or the number of SRS resources included in the specified SRS resource set is 1 (that is, when the second condition is met), the first parameter is also indicated through the indication information indicating the transmission mode of the PUSCH.

The indication information includes the following three states:
a state indicating that the PUSCH transmission is an M-TRP transmission;
a state indicating that the PUSCH transmission is an S-TRP transmission and corresponding to a first transmission node (first parameter);
a state indicating that the PUSCH transmission is an S-TRP transmission and corresponding to a second transmission node (the first parameter).

It is to be noted that, in case that the above PUSCH transmission is S-TRP transmission, what the indication information indicates is not limited to which transmission node the PUSCH transmission is corresponding to, and may also indicate which SRS resource set the PUSCH transmission is corresponding to, and/or which power control parameter set the PUSCH transmission is corresponding to.

Optionally, when the specified SRI field is not included in the control information (when the second condition is met), an SRI field with a non-zero bit width included in the control information is used to indicate an SRS resource (the first parameter) corresponding to the transmission node indicated by the indication information.

Optionally, in case that the control information includes only one SRI field with a non-zero bit width, or the number of SRS resources included in one SRS resource set is 1 (that is, when the second condition is met), the first parameter is also indicated through the indication information indicating the transmission mode of the PUSCH.

The indication information includes the following three states:
a state indicating that the PUSCH transmission is an M-TRP transmission;
a state indicating that the PUSCH transmission is an S-TRP transmission and corresponding to a first transmission node;
a state indicating that the PUSCH transmission is an S-TRP transmission and corresponding to a second transmission node.

Optionally, in case that the control information includes only one SRI field with a non-zero bit width, optionally, the SRI field with a non-zero bit width in the control information is used to indicate a second parameter (for example, an SRS resource) corresponding to the transmission node indicated by the indication information.

Therefore, in case that the control information includes only one first information field with a non-zero bit width, the method further includes:
determining the second parameter according to the first information field with the non-zero bit width, for example, determining an SRS resource corresponding to the PUSCH transmission.

Optionally, in case that the control information includes at least two SRI fields (satisfying the first condition), the information field (that is, indication information) used to indicate that the PUSCH transmission is S-TRP or M-TRP includes two states: a state indicating that the PUSCH transmission is M-TRP transmission, and a state indicating that the PUSCH transmission is S-TRP transmission.

In case that the specified SRI field is included in the control information, the information field (that is, the indication information) used to indicate that the PUSCH transmission is S-TRP or M-TRP, includes two states: a state indicating that the PUSCH transmission is M-TRP transmission, and a state indicating that the PUSCH transmission is S-TRP transmission.

Optionally, in case that the control information includes a specified SRI field and/or the control information includes N SRI fields, the first N states of one SRI field are used to indicate TRPs (i.e., the first parameter, optional, N=2) corresponding to the PUSCH.

Optionally, the specified SRI field is a second SRI field in the control information, and a first SRI field in the control information indicates an SRS resource (i.e. indicating the second parameter) corresponding to the transmission node indicated by the specified SRI field.

Optionally, in case that the control information includes only the specified SRI field, the SRS resource corresponding to the PUSCH transmission is an SRS resource configured in the corresponding SRS resource set indicated by the specified SRI field.

It is to be noted that among the above "optional" implementations, one or at least two of these implementations may be applied in the method described in the present disclosure at the same time.

Optionally, in case that the PUSCH is M-TRP transmission, each SRI field in the control information is used to indicate an SRS resource corresponding to the PUSCH. Optionally, the information field (indication information) used to indicate that the PUSCH transmission is S-TRP or M-TRP, includes two states: a state indicating that the PUSCH transmission is an M-TRP transmission, and a state indicating that the PUSCH transmission is an S-TRP transmission.

Optionally, in case that each SRI field in the control information is used to indicate the SRS resource corresponding to the PUSCH, each SRI field in the control information has a preset association relationship with each TRP or SRS resource set. For example, a first SRI field in the control information indicates an SRS resource corresponding to a first transmission node, and a second SRI field indicates an SRS resource corresponding to a second transmission node.

Optionally, in the signal transmission method of the embodiment of the present disclosure, whether there is an SRI field in the DCI, is determined according to the number of SRS resources included in the SRS resource set corresponding to the PUSCH.

Optionally, when the number of SRS resources included in one SRS resource set is 1, an SRI field corresponding to the SRS resource set is not in the control information.

Optionally, in case that the number of SRS resources included in the specified SRS resource set is 1, the first N states of one SRI field in the control information are used to indicate TRPs (optional, N=2) corresponding to the PUSCH. Optionally, other states of the one SRI field are reserved states.

In another implementation manner, the first information field being TPMI field is taken as an example.

In case that the PUSCH is S-TRP transmission, the first parameter is determined according to a condition satisfied by a TPMI field in the control information, for example, according to the number of TPMI fields.

Optionally, in case that the control information does not include the TPMI field, or the number of ports of SRS resources included in the SRS resource set corresponding to the PUSCH is 1, the first parameter is indicated through the indication information indicating the transmission mode of the PUSCH.

The indication information includes the following three states:
a state indicating that the PUSCH transmission is an M-TRP transmission;
a state indicating that the PUSCH transmission is an S-TRP transmission and is corresponding to a first TRP (first parameter);
a state indicating that the PUSCH transmission is S-TRP transmission, and corresponding to a second TRP (first parameter).

Therefore, according to the indication information, the transmission mode of the PUSCH and the corresponding first parameter can be determined.

Optionally, in case that the specified TPMI field is not included in the control information, or the number of ports of the SRS resources included in the specified SRS resource set is 1, the first parameter is indicated through the indication information indicating the transmission mode of the PUSCH.

The indication information includes the following three states:
a state indicating that the PUSCH transmission is an M-TRP transmission;
a state indicating that the PUSCH transmission is an S-TRP transmission and corresponding to a first TRP;
a state indicating that the PUSCH transmission is S-TRP transmission and corresponding to a second TRP.

It is to be noted that, in case that the above PUSCH transmission is S-TRP transmission, what the indication information indicates is not limited to which transmission node the is corresponding to, and may also indicate which SRS resource set the PUSCH transmission is corresponding to, and/or which power control parameter set the PUSCH transmission is corresponding to.

In case that the control information does not include the specified TPMI field, optionally, the control information includes a TPMI field which is used to indicate precoding information corresponding to the TRP indicated by the indication information. For example, a first TPMI field in the control information indicates precoding information corresponding to the SRS resource set indicated by the indication information.

Optionally, in case that there is only one TPMI field with a non-zero bit width in the control information, or the number of ports of SRS resources included in one SRS resource set is 1, the first parameter is indicated through the indication information indicating the transmission mode of the PUSCH.

The indication information includes the following three states:
a state indicating that the PUSCH transmission is an M-TRP transmission;
a state indicating that the PUSCH transmission is an S-TRP transmission and corresponding to a first TRP;
a state indicating that the PUSCH transmission is S-TRP transmission and corresponding to a second TRP.

Optionally, in case that there is only one TPMI field with a non-zero bit width in the control information, optionally, the TPMI field with a non-zero bit width in the control information is used to indicate precoding information (that is, the second parameter) corresponding to the transmission node indicated by the indication information.

Therefore, in case that the control information includes only one first information field with a non-zero bit width, the method further includes:
determining a second parameter according to the first information field with a non-zero bit width, for example, determining precoding information corresponding to the transmission node indicated by the indication information.

Optionally, in case that the control information includes at least two TPMI fields, the information field (that is, indication information) used to indicate that the PUSCH transmission is S-TRP or M-TRP, includes two states: a state indicating that the PUSCH transmission is an M-TRP transmission, and a state indicating that the PUSCH transmission is an S-TRP transmission.

Optionally, in case that the control information includes a specified TPMI field, the information field (that is, the indication information) used to indicate that the PUSCH transmission is S-TRP or M-TRP, includes two states: a state indicating that the PUSCH transmission is an M-TRP transmission, and a state indicating that the PUSCH transmission is an S-TRP transmission.

Optionally, in case that the control information includes a specified TPMI field, the first N states of one TPMI field are used to indicate TRPs (optional, N=2) corresponding to the PUSCH. Optionally, other states of the TPMI field are reserved states.

Optionally, the specified TPMI field is a second TPMI field in the control information. A first TPMI field in the control information indicates precoding information (that is, indicating the second parameter) corresponding to the TRP indicated by the specified TPMI field, or, the first TPMI field in the control information indicates the precoding information corresponding to the SRS resource set indicated by the second TPMI field.

Optionally, the control information includes only the specified TPMI field, and the precoding information corresponding to the PUSCH transmission is precoding information corresponding to the SRS resource set/SRS resource corresponding to the transmission node indicated by the specified TPMI field; or, the precoding information corresponding to the PUSCH transmission is precoding information corresponding to the SRS resource set/SRS resource indicated by the specified TPMI field in the control information.

It is to be noted that in the above "optional" implementations, one or at least two of these implementations may be applied in the method described in the present disclosure at the same time.

Optionally, the specified TPMI field is a TPMI field corresponding to a specified SRS resource set. The specified SRS resource set may be agreed between the base station and the UE.

Optionally, when the PUSCH is M-TRP transmission, each TPMI field in the control information is used to indicate precoding information corresponding to the PUSCH. Optionally, the information field (indication information) used to indicate that the PUSCH transmission is S-TRP or M-TRP; includes two states: a state indicating that the PUSCH transmission is an M-TRP transmission, and a state indicating that the PUSCH transmission is an S-TRP transmission.

Optionally, in case that each TPMI field in the control information is used to indicate the precoding information corresponding to the PUSCH, each TPMI field in the control information has a preset association with each TRP or SRS resource set relation. For example, a first TPMI field in the control information indicates a precoding matrix corresponding to a first transmission node, and a second TPMI field indicates precoding information corresponding to a second transmission node.

Optionally, in the signal transmission method in the embodiments of the present disclosure, whether there is a TPMI field in the DCI is determined according to the number of ports of the SRS resource included in the SRS resource set corresponding to the PUSCH.

Optionally, in case that all the SRS resources included in one SRS resource set are single-port SRS resources, a TPMI field corresponding to the SRS resource set does not exist in the control information.

Optionally, in case that at least some SRS resources included in an SRS resource set are multi-port SRS resources, a TPMI field corresponding to the SRS resource set exists in the control information.

Optionally, in case that all SRS resources included in the specified SRS resource set are single-port SRS resources, the first N states of one TPMI field in the control information are used to indicate transmission nodes (optional, N=2) corresponding to the PUSCH. Optionally, other states of the TPMI field are reserved states.

Optionally, the signal transmission method in the embodiments of the present disclosure further includes at least one of the following:
in case that the transmission mode is the first transmission mode and the number of SRS resources included in the SRS resource set associated with the specified first information field is 1, a bit width of the specified first information field is non-zero;
in case that the transmission mode is the second transmission mode and the number of antenna ports of all SRS resources in the SRS resource set associated with the specified first information field is 1, a bit width of the specified first information field is non-zero.

Specifically, in case that the transmission mode is the first transmission mode and the first information field is the SRI field, according to the number of SRS resources included in the SRS resource set associated with the specified first information field being 1, a bit width of the specified first information field is determined to be non-zero.

In case that the transmission mode is the second transmission mode and the first information field is the TPMI field, according to the number of antenna ports of all SRS resources in the SRS resource set associated with the specified first information field being 1, a bit width of the specified first information field is determined to be non-zero.

It is to be noted that, in the signal transmission method of the embodiments of the present disclosure, in each of the above implementation manners, the specified first information field is any of the following:

M-th first information field; where M is a specified value;
a first information field with the minimum bit width among at least two first information fields;
a first information field with the maximum bit width among at least two first information fields;
only one first information field included in the control information for scheduling the PUSCH.

By using the signal transmission method of the embodiments of the present disclosure, the base station determines the transmission mode corresponding to the PUSCH transmission, and determines, according to the determined transmission mode, the coding mode for indicating the first parameter and/or the second parameter to the terminal. For example, in the case of indicating the first parameter and/or the second parameter through the first information field in the control information for scheduling the PUSCH, a parameter value of the first information field in the control information is determined and used to indicate the first parameter and/or the second parameter.

Optionally, the base station may also determine, according to the transmission mode corresponding to the PUSCH transmission, a parameter value of the transmission mode to indicate the first transmission mode and/or the second transmission mode.

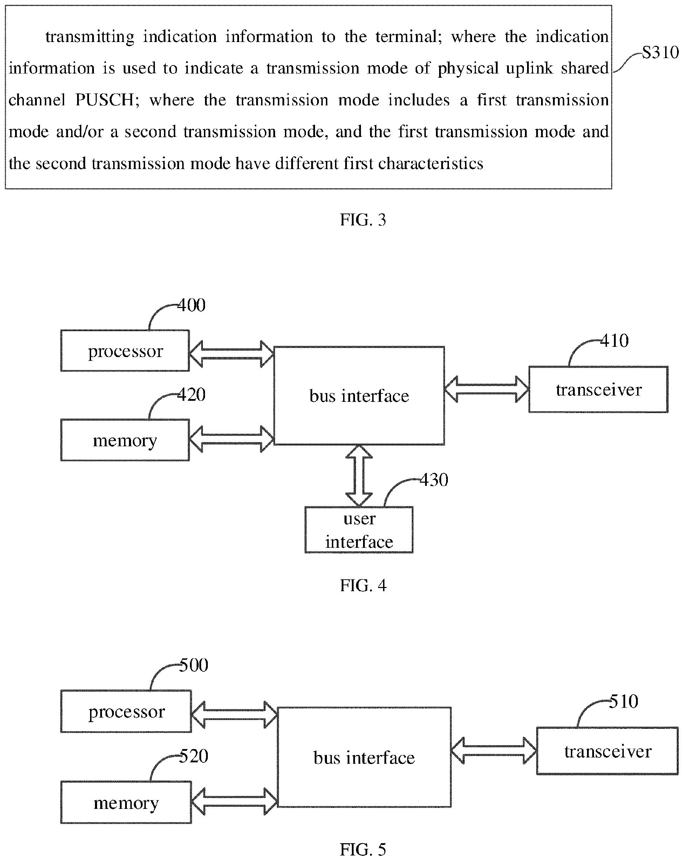

Based on the above, one embodiment of the present disclosure further provides a signal transmission method, as shown in FIG. 3, applied to a base station, including:

S310: transmitting indication information to the terminal; where the indication information is used to indicate a transmission mode of physical uplink shared channel PUSCH; where the transmission mode includes a first transmission mode and/or a second transmission mode, and the first transmission mode and the second transmission mode have different first characteristics.

According to the signal transmission method in the embodiment of the present disclosure, a dedicated indication information is used to indicate a PUSCH transmission mode, and parameters of corresponding PUSCH transmission can be determined based on the indicated indication information and the indicated transmission mode. In this way, in a multi-TRP scenario or a terminal multi-panel scenario, a first parameter (such as corresponding TRP or panel) and/or a second parameter (such as uplink scheduling information) corresponding to the PUSCH transmission can be determined based on the PUSCH transmission mode (such as the number of corresponding TRPs or panels), thereby determining different parameters under different transmission modes and saving the overhead of parameter indication. In addition, compared with the related art, decoding performance of PDCCH can be improved.

In the embodiment of the present disclosure, optionally, the PUSCH transmission mode indicated to the terminal may be a terminal single-panel (S-panel) transmission and/or a terminal multi-panel (M-panel) transmission. For example, the first transmission mode may be an S-panel transmission, and the second transmission mode may be an M-panel transmission.

In another implementation manner, in this embodiment of the present disclosure, optionally, the transmission manner determined according to the indication information may be an S-TRP transmission and/or M-TRP transmission. For example, the first transmission mode may be an S-TRP transmission, and the second transmission mode may be an M-TRP transmission.

Optionally, the first transmission mode may be a transmission mode including one or more of the following first characteristics:
the number of transmit beams or spatial-related information corresponding to the PUSCH transmission is 1;
the PUSCH transmission is associated with one SRS resource set;
the PUSCH transmission is only corresponding to one SRI field;
the PUSCH transmission is only corresponding to one TPMI field;
the number of valid TPMI fields in DCI is 1;
the number of valid SRI fields in the DCI is 1;
the PUSCH transmission is associated with one set of power control parameters;
the PUSCH transmission is associated with one first power control parameter;
the PUSCH transmission is associated with one terminal panel.

Optionally, the second transmission mode may be a transmission mode including one or more of the following first characteristics:
the PUSCH transmission is associated with two SRS resource sets;
the PUSCH transmission is associated with multiple SRS resource sets;
the PUSCH transmission is associated with two power control parameter sets;
the PUSCH transmission is associated with multiple power control parameter sets;
the PUSCH transmission is corresponding to two SRI fields;
the PUSCH transmission is corresponding to multiple SRI fields;
the PUSCH transmission is corresponding to two TPMI fields;
the PUSCH transmission is corresponding multiple TPMI fields;
the PUSCH transmission is corresponding to two transmit beams or spatial-related information;
the PUSCH transmission is corresponding to multiple transmit beams or spatial-related information;
the number of valid TPMI fields in the DCI is 2;
the number of valid SRI fields in the DCI is 2;
the number of valid TPMI fields in the DCI is greater than 1;
the number of valid SRI fields in the DCI is greater than 1;
the PUSCH transmission is associated with multiple power control parameter sets;
the PUSCH transmission is associated with two power control parameter sets;
the PUSCH transmission is associated with two terminal panels;
the PUSCH transmission is associated with multiple terminal panels.

Therefore, in the embodiment of the present disclosure, optionally, in the signal transmission method, the first characteristic of the first transmission mode and/or the second transmission mode is a characteristic associated with one or more of the following: a transmission node, a sounding reference signal (SRS) resource set, spatial-related information, a power control parameter, and a power control parameter set; and/or,
the first characteristic of the first transmission mode and/or the second transmission mode is a characteristic associated with the number of one or more of the following: a transmission node, a sounding reference signal (SRS) resource set, a spatial-related parameter, a power control parameter and a power control parameter set.

Optionally, the signal transmission method further includes: indicating the first parameter and/or the second parameter to the terminal in at least one of the following ways:
indicating the first parameter and/or the second parameter through a first information field in the control information for scheduling the PUSCH;
indicating the first parameter through the indication information.

In this step, the control information includes, but is not limited to, only downlink control information (DCI) for scheduling the PUSCH.

In this embodiment, optionally, in case that the control information includes the DCI for scheduling the PUSCH, the first information field may include or be an SRI field and/or a TPMI field in the DCI.

Optionally, indicating the first parameter and/or the second parameter through a first information field in the control information for scheduling the PUSCH, includes any of the following:
the first information field of the control information for scheduling the PUSCH is in one-to-one correspondence with TRPs corresponding to the PUSCH transmission;
the first information field of the control information for scheduling the PUSCH is in one-to-one correspondence with SRS resource sets corresponding to the PUSCH transmission;
the first information field of the control information for scheduling the PUSCH is in one-to-one correspondence with power control parameters corresponding to the PUSCH transmission;
in case that the first information field is not an SRI field, the first information field of the control information for scheduling the PUSCH is in one-to-one correspondence with the SRI fields corresponding to the PUSCH transmission;
in case that the first information field is not an SRI field, the first information field of the control information for scheduling the PUSCH is in one-to-one correspondence with the TPMI fields corresponding to the PUSCH transmission;
the first information field of the control information for scheduling the PUSCH is in one-to-one correspondence with transmission beams or spatial related information corresponding to the PUSCH transmission;
the first information field of the control information for scheduling the PUSCH is in one-to-one correspondence with power control parameter sets corresponding to the PUSCH transmission;
the first information field of the control information for scheduling the PUSCH is in one-to-one correspondence with panels corresponding to the PUSCH transmission.

Optionally, one implementation manner is that, the transmission mode of the PUSCH (for example, the first transmission mode or the second transmission mode) is indicated through the indication information; based on the transmission mode of the PUSCH, the first parameter and/or the second parameter is indicated by the first information field in the control information for scheduling the PUSCH. For example, one implementation manner is that whether the PUSCH transmission is S-TRP transmission or M-TRP transmission is indicated by the indication information; based on whether the PUSCH is S-TRP transmission or M-TRP transmission, the first parameter and/or the second parameter is indicated by the first information field in the control information for scheduling the PUSCH. By taking the first information field being an SRI field as an example, assuming that the indication information indicates that the transmission of the PUSCH is the first transmission mode (for example, S-TRP transmission), and the DCI includes multiple SRI fields, one way is that: the base station indicates a TRP (the first parameter) corresponding to the PUSCH transmission through a second SRI field, and the base station indicates an SRS resource (the second parameter) corresponding to the PUSCH transmission through a first SRI field. Still taking the first information field being the SRI field as an example, assuming that the indication information indicates that the transmission of the PUSCH is the second transmission mode (for example, M-TRP transmission), the DCI includes multiple SRI fields, one way is that: an SRS resource (second parameter) corresponding to each of the two TRPs corresponding to the PUSCH transmission is indicated through multiple SRI fields.

Optionally, indicating the first parameter through the indication information, includes: simultaneously indicating, by the indication information, the transmission mode of the PUSCH and the first parameter. For specific indication manner of the indication information, reference may be made to the description on the terminal side, which is not repeated here. In this embodiment of the present disclosure, optionally, the first information field and the second information field may be the same information field, or may be different information fields.

Optionally, in the signal transmission method, indicating the first parameter and/or the second parameter through a first information field in the control information for scheduling the PUSCH, includes any of the following:
indicating the first parameter through states of N states of one first information field in the control information; where N is an integer greater than or equal to 2;
indicating the second parameter through at least one first information field in the control information.

Optionally, a value of N is the same as the number of TRPs corresponding to the PUSCH transmission. Optionally, the N states are corresponding to the TRPs in a one-to-one manner.

Optionally, a value of N is the same as the number of spatial-related information corresponding to the PUSCH transmission.

Optionally, a value of N is the same as the number of SRS resource sets corresponding to the PUSCH transmission.

Optionally, a value of N is the same as the number of power control parameters corresponding to the PUSCH transmission.

Optionally, a value of N is the same as the number of power control parameter sets corresponding to the PUSCH transmission.

Optionally, a value of N is the same as the number of panels corresponding to the PUSCH transmission.

Optionally, when the first information field is not an SRI field, a value of N is the same as the number of SRI fields corresponding to the PUSCH transmission. Optionally, the N states are corresponding to the SRI fields in a one-to-one manner.

Optionally, the power control parameter is a parameter related to a path loss reference signal and the like.

Optionally, in case that at least one first information field in the control information is used to indicate the second parameter, the second parameter is indicated according to at least two first information fields in the control information. Among the at least two first information fields, different first information fields are corresponding to different transmission nodes, spatial-related information, SRS resource sets, power control parameters, and power control parameter sets. An illustration is given hereinafter, based on the following example in which the PUSCH transmission mode determined according to the indication information is S-TRP transmission or M-TRP, that is, the first transmission mode is S-TRP transmission, the second transmission mode is M-TRP transmission, and the first information field includes an SRI field and/or TPMI field.

In one embodiment, optionally, in case that the indication information indicates the PUSCH transmission mode as the first transmission mode (for example, S-TRP transmission), the first N states of one SRI field in the control information for scheduling the PUSCH, are used to indicate the transmission node (the first parameter) corresponding to the PUSCH transmission.

In case that the indication information indicates the PUSCH transmission mode as the second transmission mode (for example, M-TRP transmission), at least one SRI field (first information field) in the control information for scheduling the PUSCH, is used to indicate an SRS resource (the second parameter) corresponding to the PUSCH.

Optionally, in case that the control information for scheduling the PUSCH includes at least two first information fields, i.e., at least two SRI fields, the at least two SRI fields are respectively used to indicate the SRS resources corresponding to the PUSCH, and each SRI field has a preset association relationship with different transmission nodes or SRS resource sets, etc. respectively. For example, a first SRI field in the control information indicates the SRS resource corresponding to a first transmission node, and a second SRI field indicates the SRS resource corresponding to a second transmission node.

Therefore, in this embodiment, in case that the transmission mode of PUSCH is the second transmission mode, corresponding second parameters are respectively indicated by at least two first information fields in the control information, where different first information fields are corresponding to different second parameters.

Optionally, in the signal transmission method, in the case that the first parameter is indicated by states of the N states of the first information field in the control information, the method further includes:
indicating the first parameter by a specified first information field in the control information which includes at least two first information fields, and indicating the second parameter by another first information field other than the specified first information field in the control information which includes at least two first information fields.

For example, in the above embodiment, in case that the indication information indicates the transmission mode of the PUSCH as the first transmission mode (for example, S-TRP transmission), the first N states of one SRI field (first information field) in the control information for scheduling the PUSCH, are used to indicate the transmission node (the first parameter) corresponding to the PUSCH transmission. Further, optionally, another SRI field (first information field) in the control information indicates an SRS resource (that is, the second parameter) corresponding to the transmission node indicated by the one SRI field.

In another embodiment, optionally, in case that the indication information indicates the PUSCH transmission mode as the first transmission mode, i.e., S-TRP transmission, the first N states of one TPMI field (first information field) in the control information for scheduling the PUSCH, are used to indicate the transmission node (the first parameter) corresponding to the PUSCH transmission.

Optionally, the one TPMI field in the control information is a second TPMI field in the control information, and is used to indicate the transmission node corresponding to the PUSCH transmission. A first TPMI field in the control information is used to indicate precoding information and/or transmission layers (the second parameter) corresponding to the transmission node indicated by the second TPMI field. Therefore, the UE can determine the first parameter (transmission node) according to one of the at least two first information fields (TPMI fields) in the control information, and determine the second parameter (precoding information and/or number of transmission layers) according to the other first information field (TPMI field).

In case that the indication information indicates the PUSCH transmission mode as the second transmission mode, i.e., M-TRP transmission, at least one TPMI field (first information field) in the control information for scheduling the PUSCH, is used to indicate precoding information (second parameter) corresponding to the PUSCH; that is, the terminal determines the precoding information corresponding to the PUSCH according to at least one TPMI field. Optionally, in case that the control information for scheduling the PUSCH includes at least two first information fields, i.e., at least two TPMI fields, the at least two TPMI fields are respectively used to indicate the precoding information corresponding to the PUSCH, and each TPMI field has a preset association relationship with different transmission nodes or SRS resource sets. For example, a first TPMI field in the control information indicates precoding information corresponding to a first transmission node, and a second TPMI field indicates precoding information corresponding to a second transmission node.

Optionally, the signal transmission method further includes at least one of the following:
in case that the transmission mode is the first transmission mode, indicating the first parameter through a specified first information field in the first information field;
in case that the transmission mode is the second transmission mode, indicating the second parameter through a specified first information field in the first information field.

According to the signal transmission method in the embodiment of the present disclosure, by adopting this implementation mode, in case that the PUSCH transmission modes determined according to the indication information are different, the specified first information field in the first information field is used to indicate different parameters.

As another example, in the above embodiment, in case that the transmission mode is S-TRP transmission (the first transmission mode), the specified SRI field (the first information field) is used to indicate the transmission node (the first parameter) corresponding to the PUSCH transmission; in case that the transmission mode is M-TRP transmission (the second transmission mode), the specified SRI field (the first information field) is used to indicate the SRS resource (the second parameter) corresponding to the PUSCH transmission.

In various embodiments of the present disclosure, on the basis of indicating the transmission mode of the PUSCH through the indication information, a coding mode and/or indicated content of the first information field in the control information for scheduling the PUSCH can be further indicated through the transmission mode.

Optionally, in case that the transmission mode is the first transmission mode, the coding mode of the specified first information field in the control information for scheduling the PUSCH is a first coding mode; in case that the transmission mode is the second transmission mode, the coding mode of the specified first information field in the control information for scheduling the PUSCH is a second coding mode.

Optionally, in case that the transmission mode is the first transmission mode, the specified first information field in the control information for scheduling the PUSCH is used to indicate a first parameter; in case that the transmission mode is the second transmission mode, the specified first information field in the control information for scheduling the PUSCH is used to indicate the second parameter.

Optionally, in case that the transmission mode is the first transmission mode, the specified first information field in the control information for scheduling the PUSCH is used to indicate the first parameter and a first encoding mode; in case that the mode is the second transmission mode, the specified first information field in the control information for scheduling the PUSCH is used to indicate the second parameter and a second encoding mode.

Optionally, in case that the specified first information field in the control information for scheduling the PUSCH is used to indicate the second parameter, the first information field in the control information for scheduling the PUSCH has a one-to-one correspondence with the TRP corresponding to the PUSCH transmission.

Specifically, in the case that the PUSCH transmission modes determined according to the indication information are different, the specified first information field in the first information field is used to indicate different information, and examples of indicating different information may refer to the description on the terminal side and will not be described in detail here.

Optionally, the signal transmission method further includes:
indicating the first parameter by the first information field in the control information for scheduling the PUSCH when a first condition is met.

The first condition includes one or more of the following:
the control information for scheduling the PUSCH includes the specified first information field;
a bit width of the specified first information field in the control information for scheduling the PUSCH is non-zero;
the control information for scheduling the PUSCH includes at least two first information fields;
the number of SRS resources included in a specified SRS resource set is greater than 1;
the transmission mode of the PUSCH is at least corresponding to multiple SRS resource sets, and the number of SRS resources included in at least two SRS resource sets in the multiple SRS resource sets is greater than 1;
the number of antenna ports of at least one SRS resource in the specified SRS resource set is greater than 1;
the transmission mode of the PUSCH is at least corresponding to multiple SRS resource sets, and at least two SRS resource sets in the multiple SRS resource sets satisfy the following condition: the number of antenna ports of at least one SRS resource is greater than 1.

Optionally, the signal transmission method further includes:
indicating the first parameter through the indication information when a second condition is met.

The second condition includes one or more of the following:
the control information for scheduling the PUSCH does not include a first information field;
the control information for scheduling the PUSCH does not include a specified first information field;
the control information for scheduling the PUSCH includes a specified first information field and a bit width of the specified first information field is zero;
the control information for scheduling the PUSCH only includes a first information field with a non-zero bit width;
the control information for scheduling the PUSCH includes a first information field and a bit width of the first information field is zero;
the number of SRS resources included in the specified SRS resource set is equal to 1;
the number of SRS resources included in all SRS resource sets corresponding to the PUSCH transmission mode is equal to 1;
the number of antenna ports of all SRS resources in the specified SRS resource set is equal to 1;
the number of antenna ports of all SRS resources in all SRS resource sets corresponding to the PUSCH transmission mode is equal to 1.

Optionally, in the signal transmission method, in the case that the control information includes only one first information field with a non-zero bit width, the method further includes:
indicating the second parameter by the first information field with a non-zero bit width.

Optionally, in the signal transmission method, the specified first information field is any of the following:
M-th first information field; where M is a specified value;
a first information field with the minimum bit width among at least two first information fields;
a first information field with the maximum bit width among at least two first information fields;
only one first information field included in the control information for scheduling the PUSCH.

Optionally, the signal transmission method further includes at least one of the following:
in case that the transmission mode is the first transmission mode and the number of SRS resources included in the SRS resource set associated with the specified first information field is 1, a bit width of the specified first information field is non-zero;
in case that the transmission mode is the second transmission mode and the number of antenna ports of all SRS resources in the SRS resource set associated with the specified first information field is 1, a bit width of the specified first information field is non-zero.

Optionally, in the signal transmission method, the transmitting indication information, includes one or more of the following:
transmitting the indication information through the second information field in the control information for scheduling the PUSCH;
transmitting the indication information through radio resource control (RRC) signaling;
transmitting the indication information through medium access control (MAC) signaling.

Optionally, in the signal transmission method, the first parameter includes one or more of the following: the transmission node, SRS resource, SRS resource set, power control parameter, power control parameter set and spatial-related information corresponding to the PUSCH transmission.

Optionally, the second parameter includes one or more of the following: SRS resource, SRS resource set, power control parameter, power control parameter set, spatial-related information, precoding information and number of transmission layers.

It is to be noted that, the specific implementation process when the base station performs the signal transmission method in the embodiment of the present disclosure, may refer to the specific implementation process when the terminal performs the signal transmission method, and will not be described in details here.

The signal transmission method described in the embodiments of the present disclosure is illustrated below with examples.

### Embodiment one

In this embodiment, a base station determines a transmission mode corresponding to PUSCH transmission, and determines, according to the determined transmission mode, an encoding mode for indicating a first parameter and/or a second parameter to a terminal.

Specifically, the base station may further determine, according to the transmission mode corresponding to the PUSCH transmission, a parameter value of transmission mode used to transmit the indication information, to indicate a first transmission mode and/or a second transmission mode. The indication information is used to indicate the coding information of the first transmission mode, which is different from encoding information used to indicate the second transmission mode.

For example, the first transmission mode indicated by the indication information is S-TRP transmission and the second transmission mode indicated is M-TRP transmission. For example, the indication information is expressed as shown in the following Table 1:

**Table 1**

| State of indicating PUSCH transmission to be S-TRP or M-TRP | Indicated information |
|---|---|
| 1 | 1 transmission node (first transmission mode) corresponding to PUSCH transmission |
| 2 | 2 transmission nodes (second transmission mode) corresponding to PUSCH transmission |

### Embodiment two

In this embodiment, the base station determines, according to the transmission mode corresponding to the PUSCH transmission, the parameter value of the transmission mode used to transmit the indication information, to indicate the first transmission mode and/or the second transmission mode. In this embodiment, the indication information is further used to indicate the first parameter corresponding to the transmission mode and/or the second parameter corresponding to the PUSCH transmission. For example, the first transmission mode indicated by the indication information is S-TRP transmission and the second transmission mode indicated is M-TRP transmission, and the indication information is further used to indicate respective transmission nodes corresponding to the PUSCH transmission.

Specifically, the indication information may include: a state indicating that the PUSCH transmission is an M-TRP transmission, a state indicating that the PUSCH transmission is an S-TRP transmission and corresponding to a first TRP (first parameter), and state indicating the PUSCH transmission is S-TRP transmission and corresponding to a second TRP (first parameter).

The indication information may indicate the above three different states through different parameter values. The terminal can determine the transmission mode corresponding to the PUSCH transmission according to different parameter values of the indication information. For example, the indication information is expressed as shown in the following Table 2:

**Table 2**

| State of indicating transmission mode of PUSCH and first parameter and/or second parameter | Indicated information |
|---|---|
| 0 | 2 transmission nodes corresponding to PUSCH transmission |
| 1 | first transmission node corresponding to PUSCH transmission |
| 2 | second transmission node corresponding to PUSCH transmission |
| 3 | reserved |

In this embodiment, optionally, the indication information used to indicate that the PUSCH transmission is S-TRP or M-TRP, is included in the control information. The base station further determines the parameter value when the indication information is further used to indicate the first parameter and/or the second parameter according to the indicated transmission mode of S-TRP or M-TRP.

### Embodiment Three

The base station determines, according to the transmission mode corresponding to the PUSCH transmission, the parameter value of the transmission mode used to transmit the indication information. Specifically, in case that the first transmission mode indicated by the indication information is S-TRP transmission and the second transmission mode indicated by the indication information is M-TRP transmission, the indication information indicating that the PUSCH transmission is S-TRP or M-TRP is included in the control information. The base station determines, according to the transmission mode indicated by the indication information, an information parameter value or encoding manner of the first information field (including an SRI field and/or TPMI field) in control information for scheduling PUSCH. Optionally, the first information field is further used to indicate the first parameter and/or the second parameter.

For example, in the case that the PUSCH is S-TRP transmission, the first N states of an SRI field in the DCI are used to indicate TRPs corresponding to the PUSCH (optional, N=2).

Optionally, the DCI includes two SRI fields, where a first SRI field is used to indicate an SRS resource of TRP corresponding to the PUSCH; a second SRI field is used to indicate TRP corresponding to the PUSCH.

For example, the indication manner of the second SRI field is shown in the following Table 3:

**Table 3**

| state | Indicated information |
|---|---|
| 0 | First TRP corresponding to PUSCH transmission |
| 1 | second TRP corresponding to PUSCH transmission |
| 2 | reserved |
| 3 | reserved |

In case that the PUSCH is M-TRP transmission, each SRI field in the DCI is used to indicate the SRS resource corresponding to the PUSCH.

Optionally, the information field/parameter used to indicate that the PUSCH transmission is S-TRP or M-TRP includes the following two states: a state indicating that the PUSCH transmission is an M-TRP transmission, and a state indicating that the PUSCH transmission is an S-TRP transmission.

It is to be noted that, the above embodiments using the signal transmission method in the present disclosure are only examples and are not specifically limited thereto, and will not be explained in detail here with examples.

As shown in FIG. 4, one embodiment of the present disclosure further provides a terminal, including a processor 400, a transceiver 410, a memory 420, and a program stored in the memory 420 and executable on the processor 400. The transceiver 410 is connected to the processor 400 and the memory 420 through a bus interface. The processor 400 is used to read the program in the memory and perform the following process:
obtaining indication information;
determining a transmission mode of physical uplink shared channel (PUSCH) according to the indication information; where the transmission mode includes a first transmission mode and/or a second transmission mode, and the first transmission mode and the second transmission mode have different first characteristics;
according to the transmission mode, determining a first parameter and/or a second parameter corresponding to the transmission mode; where the first transmission mode is corresponding to the first parameter, and the second transmission mode is corresponding to the second parameter;
transmitting the PUSCH according to the first parameter and/or the second parameter; where the first parameter is different from the second parameter.

Optionally, in the terminal, the first characteristic of the first transmission mode and/or the second transmission mode is a characteristic associated with one or more of the following: a transmission node, a sounding reference signal (SRS) resource set, spatial-related information, a power control parameter, and a power control parameter set; and/or,
the first characteristic of the first transmission mode and/or the second transmission mode is a characteristic associated with the number of one or more of the following: a transmission node, a sounding reference signal (SRS) resource set, a spatial-related parameter, a power control parameter and a power control parameter set.

Optionally, in the terminal, when determining a first parameter and/or a second parameter corresponding to the transmission mode according to the transmission mode, the processor 400 is used to perform at least one of the following:
determining the first parameter and/or the second parameter according to a first information field in the control information for scheduling the PUSCH;
determining the first parameter according to the indication information.

Optionally, in the terminal, when determining the first parameter and/or the second parameter according to a first information field in the control information for scheduling the PUSCH, the processor 400 is used to perform at least one of the following:
determining the first parameter according to states of N states of one first information field in the control information; where N is an integer greater than or equal to 2;
determining the second parameter according to at least one first information field in the control information.

Optionally, in the terminal, when determining the first parameter according to states of N states of one first information field in the control information, the processor 400 is used to perform:
determining the first parameter according to a specified first information field in the control information which includes at least two first information fields, and determining the second parameter according to another first information field other than the specified first information field in the control information which includes at least two first information fields.

Optionally, in the terminal, when determining the first parameter and/or the second parameter according to the transmission mode, the processor 400 is used to perform:
in case that the transmission mode is the first transmission mode, determining the first parameter according to a specified first information field in the first information field;
in case that the transmission mode is the second transmission mode, determining the second parameter according to a specified first information field in the first information field.

Optionally, in the terminal, the processor 400 is used to perform:
in case of meeting a first condition, determining the first parameter according to the first information field in the control information for scheduling the PUSCH.

The first condition includes one or more of the following:
the control information for scheduling the PUSCH includes the specified first information field;
a bit width of the specified first information field in the control information for scheduling the PUSCH is non-zero;
the control information for scheduling the PUSCH includes at least two first information fields;
the number of SRS resources included in a specified SRS resource set is greater than 1;
the transmission mode of the PUSCH is at least corresponding to multiple SRS resource sets, and the number of SRS resources included in at least two SRS resource sets in the multiple SRS resource sets is greater than 1;
the number of antenna ports of at least one SRS resource in the specified SRS resource set is greater than 1;
the transmission mode of the PUSCH is at least corresponding to multiple SRS resource sets, and at least two SRS resource sets in the multiple SRS resource sets satisfy the following condition: the number of antenna ports of at least one SRS resource is greater than 1.

Optionally, in the terminal, the processor 400 is used to perform:
in case of meeting a second condition, determining the first parameter according to the indication information.

The second condition includes one or more of the following:
the control information for scheduling the PUSCH does not include a first information field;
the control information for scheduling the PUSCH does not include a specified first information field;
the control information for scheduling the PUSCH includes a specified first information field and a bit width of the specified first information field is zero;
the control information for scheduling the PUSCH only includes a first information field with a non-zero bit width;
the control information for scheduling the PUSCH includes a first information field and a bit width of the first information field is zero;
the number of SRS resources included in the specified SRS resource set is equal to 1;
the number of SRS resources included in all SRS resource sets corresponding to the PUSCH transmission mode is equal to 1;
the number of antenna ports of all SRS resources in the specified SRS resource set is equal to 1;
the number of antenna ports of all SRS resources in all SRS resource sets corresponding to the PUSCH transmission mode is equal to 1.

Optionally, in the terminal, in case that the control information includes only one first information field with a non-zero bit width, the processor 400 is used to perform:
determining the second parameter according to the first information field with the non-zero bit width.

Optionally, in the terminal, the specified first information field is any of the following:
M-th first information field; where M is a specified value;
a first information field with the minimum bit width among at least two first information fields;
a first information field with the maximum bit width among at least two first information fields;
only one first information field included in the control information for scheduling the PUSCH.

Optionally, in the terminal, the processor 400 is used to perform at least one of the following:
in case that the transmission mode is the first transmission mode and the number of SRS resources included in the SRS resource set associated with the specified first information field is 1, a bit width of the specified first information field is non-zero;
in case that the transmission mode is the second transmission mode and the number of antenna ports of all SRS resources in the SRS resource set associated with the specified first information field is 1, a bit width of the specified first information field is non-zero.

Optionally, in the terminal, when obtaining the indication information, the processor 400 is used to perform at least one of the following:
obtaining the indication information according to a second information field in control information for scheduling the PUSCH;
obtaining the indication information according to radio resource control (RRC) signaling; or,
obtaining the indication information according to media access control (MAC) signaling.

Optionally, in the terminal, the first parameter includes one or more of the following: the transmission node, SRS resource, SRS resource set, power control parameter, power control parameter set and spatial-related information corresponding to the PUSCH transmission.

The second parameter includes one or more of the following: SRS resource, SRS resource set, power control parameter, power control parameter set, spatial-related information, precoding information and number of transmission layers.

The transceiver 410 is used for receiving and sending data under the control of the processor 400.

In FIG. 4, a bus architecture may include any number of interconnected bus and bridge. Specifically, various circuits of one or more processors, which are represented by the processor 400, and one or more memories, which are represented by the memory 420, are linked together. The bus architecture may link various other circuits, such as a peripheral device, voltage regulator and a power management circuit together. These features are well known in this field; therefore, this disclosure does not make further description on these features. The bus interface provides an interface. The transceiver 410 may be multiple elements, including a transmitter and a receiver and provide units, which communicate with other devices on the transmission medium. The transmission medium includes wireless channels, wired channels, and optical cables. For different terminals, a user interface 430 may also be an interface capable of externally connecting required devices, and the connected devices include but are not limited to keypads, displays, speakers, microphones, joysticks, etc.

The processor 400 is responsible for managing the bus architecture and the normal processing. The memory 420 may be used to store data used by the processor 400 for performing operations.

Optionally, the processor 400 may be a central processing unit (CPU), an application specific integrated circuit (ASIC), a field-programmable gate array (FPGA) or a complex programmable logic device (CPLD). The processor may also adopt multi-core architecture.

As shown in FIG. 5, one embodiment of the present disclosure further provides a base station, including a processor 500, a transceiver 510, a memory 520, and a program stored in the memory 520 and executable on the processor 500. The transceiver 510 is connected to the processor 500 and the memory 520 through a bus interface. The processor 500 is used to read the program in the memory and perform the following process:
transmitting indication information to the terminal; where the indication information is used to indicate a transmission mode of physical uplink shared channel PUSCH; where the transmission mode includes a first transmission mode and/or a second transmission mode, and the first transmission mode and the second transmission mode have different first characteristics.

Optionally, in the base station, the first characteristic of the first transmission mode and/or the second transmission mode is a characteristic associated with one or more of the following: a transmission node, a sounding reference signal (SRS) resource set, spatial-related information, a power control parameter, and a power control parameter set; and/or,
the first characteristic of the first transmission mode and/or the second transmission mode is a characteristic associated with the number of one or more of the following: a transmission node, a sounding reference signal (SRS) resource set, a spatial-related parameter, a power control parameter and a power control parameter set.

Optionally, in the base station, the processor 500 is further use to indicate the first parameter and/or the second parameter to the terminal in at least one of the following manners:
indicating the first parameter and/or the second parameter through a first information field in the control information for scheduling the PUSCH;
indicating the first parameter through the indication information.

Optionally, in the base station, when indicating the first parameter and/or the second parameter through a first information field in the control information for scheduling the PUSCH, the processor 500 is used to perform at least one of the following:
indicating the first parameter through states of N states of one first information field in the control information; where N is an integer greater than or equal to 2;
indicating the second parameter through at least one first information field in the control information.

Optionally, in the base station, when indicating the first parameter through states of the N states of the first information field in the control information, the processor 500 is used to perform:
indicating the first parameter by a specified first information field in the control information which includes at least two first information fields, and indicating the second parameter by another first information field other than the specified first information field in the control information which includes at least two first information fields.

Optionally, in the base station, the processor 500 is further used to perform at least one of the following:
in case that the transmission mode is the first transmission mode, indicating the first parameter through a specified first information field in the first information field;
in case that the transmission mode is the second transmission mode, indicating the second parameter through a specified first information field in the first information field.

Optionally, in the base station, the processor 500 is further used to perform:
indicating the first parameter by the first information field in the control information for scheduling the PUSCH when a first condition is met.

The first condition includes one or more of the following:
the control information for scheduling the PUSCH includes the specified first information field;
a bit width of the specified first information field in the control information for scheduling the PUSCH is non-zero;
the control information for scheduling the PUSCH includes at least two first information fields;
the number of SRS resources included in a specified SRS resource set is greater than 1;
the transmission mode of the PUSCH is at least corresponding to multiple SRS resource sets, and the number of SRS resources included in at least two SRS resource sets in the multiple SRS resource sets is greater than 1;
the number of antenna ports of at least one SRS resource in the specified SRS resource set is greater than 1;
the transmission mode of the PUSCH is at least corresponding to multiple SRS resource sets, and at least two SRS resource sets in the multiple SRS resource sets satisfy the following condition: the number of antenna ports of at least one SRS resource is greater than 1.

Optionally, in the base station, the processor 500 is further used to perform at least one of the following:
indicating the first parameter through the indication information when a second condition is met.

The second condition includes one or more of the following:
the control information for scheduling the PUSCH does not include a first information field;
the control information for scheduling the PUSCH does not include a specified first information field;
the control information for scheduling the PUSCH includes a specified first information field and a bit width of the specified first information field is zero;
the control information for scheduling the PUSCH only includes a first information field with a non-zero bit width;
the control information for scheduling the PUSCH includes a first information field and a bit width of the first information field is zero;
the number of SRS resources included in the specified SRS resource set is equal to 1;
the number of SRS resources included in all SRS resource sets corresponding to the PUSCH transmission mode is equal to 1;
the number of antenna ports of all SRS resources in the specified SRS resource set is equal to 1;
the number of antenna ports of all SRS resources in all SRS resource sets corresponding to the PUSCH transmission mode is equal to 1.

Optionally, in the base station, in the case that the control information includes only one first information field with a non-zero bit width, the processor 500 is further used to perform:
indicating the second parameter by the first information field with a non-zero bit width.

Optionally, in the base station, the specified first information field is any of the following:
M-th first information field; where M is a specified value;
a first information field with the minimum bit width among at least two first information fields;
a first information field with the maximum bit width among at least two first information fields;
only one first information field included in the control information for scheduling the PUSCH.

Optionally, in the base station, the processor 500 is further used to perform at least one of the following:
in case that the transmission mode is the first transmission mode and the number of SRS resources included in the SRS resource set associated with the specified first information field is 1, a bit width of the specified first information field is non-zero;
in case that the transmission mode is the second transmission mode and the number of antenna ports of all SRS resources in the SRS resource set associated with the specified first information field is 1, a bit width of the specified first information field is non-zero.

Optionally, in the base station, when transmitting indication information, the processor 500 is further used to perform at least one of the following:
transmitting the indication information through the second information field in the control information for scheduling the PUSCH;
transmitting the indication information through radio resource control (RRC) signaling;
transmitting the indication information through medium access control (MAC) signaling.

Optionally, in the base station, the first parameter includes one or more of the following: the transmission node, SRS resource, SRS resource set, power control parameter, power control parameter set and spatial-related information corresponding to the PUSCH transmission.

The second parameter includes one or more of the following: SRS resource, SRS resource set, power control parameter, power control parameter set, spatial-related information, precoding information and number of transmission layers.

The transceiver 510 is used for receiving and sending data under the control of the processor 500.

In FIG. 5, a bus architecture may include any number of interconnected bus and bridge. Specifically, various circuits of one or more processors, which are represented by the processor 500, and one or more memories, which are represented by the memory 520, are linked together. The bus architecture may link various other circuits, such as a peripheral device, voltage regulator and a power management circuit together. These features are well known in this field; therefore, this disclosure does not make further description on these features. The bus interface provides an interface. The transceiver 510 may be multiple elements, including a transmitter and a receiver and provide units, which communicate with other devices on the transmission medium. The transmission medium includes wireless channels, wired channels, and optical cables. The processor 500 is responsible for managing the bus architecture and the normal processing. The memory 520 may be used to store data used by the processor 500 for performing operations.

The processor 500 may be a central processing unit (CPU), an application specific integrated circuit (ASIC), a field-programmable gate array (FPGA) or a complex programmable logic device (CPLD). The processor may also adopt multi-core architecture.

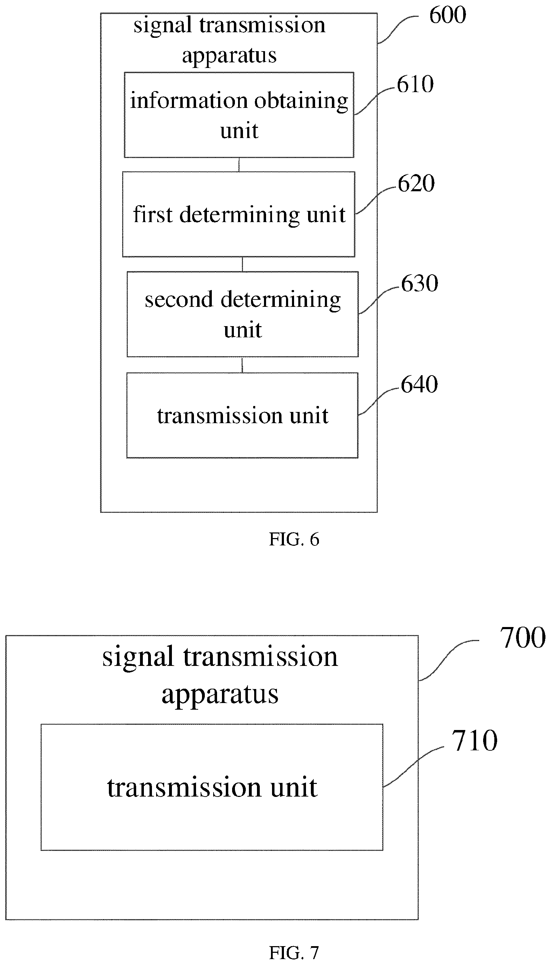

One embodiment of the present disclosure further provides a signal transmission apparatus, which is applied to a terminal. As shown in FIG. 6, the signal transmission apparatus 600 includes:
an information obtaining unit 610 configured to obtain indication information;
a first determining unit 620 configured to determine a transmission mode of physical uplink shared channel (PUSCH) according to the indication information; where the transmission mode includes a first transmission mode and/or a second transmission mode, and the first transmission mode and the second transmission mode have different first characteristics;
a second determining unit 630 configured to, according to the transmission mode, determine a first parameter and/or a second parameter corresponding to the transmission mode; where the first transmission mode is corresponding to the first parameter, and the second transmission mode is corresponding to the second parameter;
a transmission unit 640 configured to transmit the PUSCH according to the first parameter and/or the second parameter; where the first parameter is different from the second parameter.

Optionally, in the signal transmission apparatus, the first characteristic of the first transmission mode and/or the second transmission mode is a characteristic associated with one or more of the following: a transmission node, a sounding reference signal (SRS) resource set, spatial-related information, a power control parameter, and a power control parameter set; and/or,
the first characteristic of the first transmission mode and/or the second transmission mode is a characteristic associated with the number of one or more of the following: a transmission node, a sounding reference signal (SRS) resource set, a spatial-related parameter, a power control parameter and a power control parameter set.

Optionally, in the signal transmission apparatus, when determining a first parameter and/or a second parameter corresponding to the transmission mode according to the transmission mode, the second determining unit 630 is used to perform at least one of the following:
determining the first parameter and/or the second parameter according to a first information field in the control information for scheduling the PUSCH;
determining the first parameter according to the indication information.

Optionally, in the signal transmission apparatus, when determining the first parameter and/or the second parameter according to a first information field in the control information for scheduling the PUSCH, the second determining unit 630 is used to perform at least one of the following:
determining the first parameter according to states of N states of one first information field in the control information; where N is an integer greater than or equal to 2;
determining the second parameter according to at least one first information field in the control information.

Optionally, in the signal transmission apparatus, when determining the first parameter according to states of N states of one first information field in the control information, the second determining unit 630 is used to perform:
determining the first parameter according to a specified first information field in the control information which includes at least two first information fields, and determining the second parameter according to another first information field other than the specified first information field in the control information which includes at least two first information fields.

Optionally, in the signal transmission apparatus, when determining the first parameter and/or the second parameter according to the transmission mode, the second determining unit 630 is used to perform:
in case that the transmission mode is the first transmission mode, determining the first parameter according to a specified first information field in the first information field;
in case that the transmission mode is the second transmission mode, determining the second parameter according to a specified first information field in the first information field.

Optionally, in the signal transmission apparatus, the second determining unit 630 is used to perform:
in case of meeting a first condition, determining the first parameter according to the first information field in the control information for scheduling the PUSCH.

The first condition includes one or more of the following:
the control information for scheduling the PUSCH includes the specified first information field;
a bit width of the specified first information field in the control information for scheduling the PUSCH is non-zero;
the control information for scheduling the PUSCH includes at least two first information fields;
the number of SRS resources included in a specified SRS resource set is greater than 1;
the transmission mode of the PUSCH is at least corresponding to multiple SRS resource sets, and the number of SRS resources included in at least two SRS resource sets in the multiple SRS resource sets is greater than 1;
the number of antenna ports of at least one SRS resource in the specified SRS resource set is greater than 1;
the transmission mode of the PUSCH is at least corresponding to multiple SRS resource sets, and at least two SRS resource sets in the multiple SRS resource sets satisfy the following condition: the number of antenna ports of at least one SRS resource is greater than 1.

Optionally, in the signal transmission apparatus, the second determining unit 630 is used to perform:
in case of meeting a second condition, determining the first parameter according to the indication information.

The second condition includes one or more of the following:
the control information for scheduling the PUSCH does not include a first information field;
the control information for scheduling the PUSCH does not include a specified first information field;
the control information for scheduling the PUSCH includes a specified first information field and a bit width of the specified first information field is zero;
the control information for scheduling the PUSCH only includes a first information field with a non-zero bit width;
the control information for scheduling the PUSCH includes a first information field and a bit width of the first information field is zero;
the number of SRS resources included in the specified SRS resource set is equal to 1;
the number of SRS resources included in all SRS resource sets corresponding to the PUSCH transmission mode is equal to 1;
the number of antenna ports of all SRS resources in the specified SRS resource set is equal to 1;
the number of antenna ports of all SRS resources in all SRS resource sets corresponding to the PUSCH transmission mode is equal to 1.

Optionally, in the signal transmission apparatus, in case that the control information includes only one first information field with a non-zero bit width, the second determining unit 630 is used to perform:
determining the second parameter according to the first information field with the non-zero bit width.

Optionally, in the signal transmission apparatus, the specified first information field is any of the following:
M-th first information field; where M is a specified value;
a first information field with the minimum bit width among at least two first information fields;
a first information field with the maximum bit width among at least two first information fields;
only one first information field included in the control information for scheduling the PUSCH.

Optionally, in the signal transmission apparatus, the second determining unit 630 is used to perform at least one of the following:
in case that the transmission mode is the first transmission mode and the number of SRS resources included in the SRS resource set associated with the specified first information field is 1, a bit width of the specified first information field is non-zero;
in case that the transmission mode is the second transmission mode and the number of antenna ports of all SRS resources in the SRS resource set associated with the specified first information field is 1, a bit width of the specified first information field is non-zero.

Optionally, in the signal transmission apparatus, when obtaining the indication information, the information obtaining unit 610 is used to perform at least one of the following:
obtaining the indication information according to a second information field in control information for scheduling the PUSCH;
obtaining the indication information according to radio resource control (RRC) signaling; or,
obtaining the indication information according to media access control (MAC) signaling.

Optionally, in the signal transmission apparatus, the first parameter includes one or more of the following: the transmission node, SRS resource, SRS resource set, power control parameter, power control parameter set and spatial-related information corresponding to the PUSCH transmission.

The second parameter includes one or more of the following: SRS resource, SRS resource set, power control parameter, power control parameter set, spatial-related information, precoding information and number of transmission layers.

One embodiment of the present disclosure further provides a signal transmission apparatus, which is applied to a base station. As shown in FIG. 7, the signal transmission apparatus 700 includes:
a transmission unit 710 configured to transmit indication information to the terminal; where the indication information is used to indicate a transmission mode of physical uplink shared channel PUSCH; where the transmission mode includes a first transmission mode and/or a second transmission mode, and the first transmission mode and the second transmission mode have different first characteristics.

Optionally, in the signal transmission apparatus, the first characteristic of the first transmission mode and/or the second transmission mode is a characteristic associated with one or more of the following: a transmission node, a sounding reference signal (SRS) resource set, spatial-related information, a power control parameter, and a power control parameter set; and/or,
the first characteristic of the first transmission mode and/or the second transmission mode is a characteristic associated with the number of one or more of the following: a transmission node, a sounding reference signal (SRS) resource set, a spatial-related parameter, a power control parameter and a power control parameter set.

Optionally, in the signal transmission apparatus, the transmission unit 710 is further configured to indicate the first parameter and/or the second parameter to the terminal in at least one of the following manners:
indicating the first parameter and/or the second parameter through a first information field in the control information for scheduling the PUSCH;
indicating the first parameter through the indication information.

Optionally, in the signal transmission apparatus, when indicating the first parameter and/or the second parameter through a first information field in the control information for scheduling the PUSCH, the transmission unit 710 is further configured to perform at least one of the following:
indicating the first parameter through states of N states of one first information field in the control information; where N is an integer greater than or equal to 2;
indicating the second parameter through at least one first information field in the control information.

Optionally, in the signal transmission apparatus, when indicating the first parameter through states of the N states of the first information field in the control information, the transmission unit 710 is further configured to perform:
indicating the first parameter by a specified first information field in the control information which includes at least two first information fields, and indicating the second parameter by another first information field other than the specified first information field in the control information which includes at least two first information fields.

Optionally, in the signal transmission apparatus, the transmission unit 710 is further configured to perform at least one of the following:
in case that the transmission mode is the first transmission mode, indicating the first parameter through a specified first information field in the first information field;
in case that the transmission mode is the second transmission mode, indicating the second parameter through a specified first information field in the first information field.

Optionally, in the signal transmission apparatus, the transmission unit 710 is further configured to perform:
indicating the first parameter by the first information field in the control information for scheduling the PUSCH when a first condition is met.

The first condition includes one or more of the following:
the control information for scheduling the PUSCH includes the specified first information field;
a bit width of the specified first information field in the control information for scheduling the PUSCH is non-zero;
the control information for scheduling the PUSCH includes at least two first information fields;
the number of SRS resources included in a specified SRS resource set is greater than 1;
the transmission mode of the PUSCH is at least corresponding to multiple SRS resource sets, and the number of SRS resources included in at least two SRS resource sets in the multiple SRS resource sets is greater than 1;
the number of antenna ports of at least one SRS resource in the specified SRS resource set is greater than 1;
the transmission mode of the PUSCH is at least corresponding to multiple SRS resource sets, and at least two SRS resource sets in the multiple SRS resource sets satisfy the following condition: the number of antenna ports of at least one SRS resource is greater than 1.

Optionally, in the signal transmission apparatus, the transmission unit 710 is further configured to perform:
indicating the first parameter through the indication information when a second condition is met.

The second condition includes one or more of the following:
the control information for scheduling the PUSCH does not include a first information field;
the control information for scheduling the PUSCH does not include a specified first information field;
the control information for scheduling the PUSCH includes a specified first information field and a bit width of the specified first information field is zero;
the control information for scheduling the PUSCH only includes a first information field with a non-zero bit width;
the control information for scheduling the PUSCH includes a first information field and a bit width of the first information field is zero;
the number of SRS resources included in the specified SRS resource set is equal to 1;
the number of SRS resources included in all SRS resource sets corresponding to the PUSCH transmission mode is equal to 1;
the number of antenna ports of all SRS resources in the specified SRS resource set is equal to 1;
the number of antenna ports of all SRS resources in all SRS resource sets corresponding to the PUSCH transmission mode is equal to 1.

Optionally, in the signal transmission apparatus, in the case that the control information includes only one first information field with a non-zero bit width, the transmission unit 700 is further used to perform:
indicating the second parameter by the first information field with a non-zero bit width.

Optionally, in the signal transmission apparatus, the specified first information field is any of the following:
M-th first information field; where M is a specified value;
a first information field with the minimum bit width among at least two first information fields;
a first information field with the maximum bit width among at least two first information fields;
only one first information field included in the control information for scheduling the PUSCH.

Optionally, in the signal transmission apparatus, the transmission unit 700 is further used to perform at least one of the following:
in case that the transmission mode is the first transmission mode and the number of SRS resources included in the SRS resource set associated with the specified first information field is 1, a bit width of the specified first information field is non-zero;
in case that the transmission mode is the second transmission mode and the number of antenna ports of all SRS resources in the SRS resource set associated with the specified first information field is 1, a bit width of the specified first information field is non-zero.

Optionally, in the signal transmission apparatus, when transmitting indication information, the transmission unit 700 is further used to perform at least one of the following:
transmitting the indication information through the second information field in the control information for scheduling the PUSCH;
transmitting the indication information through radio resource control (RRC) signaling;
transmitting the indication information through medium access control (MAC) signaling.

Optionally, in the signal transmission apparatus, the first parameter includes one or more of the following: the transmission node, SRS resource, SRS resource set, power control parameter, power control parameter set and spatial-related information corresponding to the PUSCH transmission.

The second parameter includes one or more of the following: SRS resource, SRS resource set, power control parameter, power control parameter set, spatial-related information, precoding information and number of transmission layers.

It is to be noted that in the embodiments of the present disclosure, the above methods and corresponding apparatus are based on the same concept. Since principles of the method and the apparatus for solving the problems are similar, implementation of the device and the method can be referred to each other, and duplication is not repeated.

One embodiment of the present disclosure further provides a computer readable storage medium, which includes a computer program stored thereon. The computer program is used to cause a computer to execute steps of the above signal transmission method.

The computer readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, nonvolatile memory (Nand flash), solid-state drive (SSD)).

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and /or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. A signal transmission method applied to a terminal, comprising:
obtaining indication information;
determining a transmission mode of physical uplink shared channel (PUSCH) according to the indication information; wherein the transmission mode includes a first transmission mode and/or a second transmission mode;
determining a first parameter and/or a second parameter corresponding to the transmission mode according to the transmission mode; wherein the first transmission mode is corresponding to the first parameter, and the second transmission mode is corresponding to the second parameter; and
transmitting the PUSCH according to the first parameter and/or the second parameter.

2. The method according to claim 1, wherein a first characteristic of the first transmission mode and/or the second transmission mode is a characteristic associated with one or more of the following: a transmission node, a sounding reference signal (SRS) resource set, spatial- related information, a power control parameter, an SRI field in control information for scheduling the PUSCH, a TPMI field in the control information for scheduling the PUSCH, a terminal antenna panel, a power control parameter set; and/or,
a first characteristic of the first transmission mode and/or the second transmission mode is a characteristic associated with the number of one or more of the following: a transmission node, a sounding reference signal (SRS) resource set, a spatial-related parameter, a power control parameter, a power control parameter set.

3. The method according to claim 1 or 2, wherein the determining a first parameter and/or a second parameter corresponding to the transmission mode according to the transmission mode, includes at least one of the following:
determining the first parameter and/or the second parameter according to a first information field in the control information for scheduling the PUSCH;
determining the first parameter according to the indication information.

4. The method according to claim 3, wherein the determining the first parameter and/or the second parameter according to a first information field in the control information for scheduling the PUSCH, includes at least one of the following:
determining the first parameter according to a state from N states of one first information field in the control information; wherein N is an integer greater than or equal to 2;
determining the second parameter according to at least one first information field in the control information.

5. The method according to claim 4, wherein when determining the first parameter according to a state from N states of one first information field in the control information, the method further includes:
determining the first parameter according to a specified first information field in the control information which includes at least two first information fields, and determining the second parameter according to another first information field other than the specified first information field in the control information which includes at least two first information fields.

6. The method according to any one of claims 1 to 3, wherein the determining a first parameter and/or a second parameter corresponding to the transmission mode according to the transmission mode, includes at least one of the following:
in case that the transmission mode is the first transmission mode, determining the first parameter according to a specified first information field in the first information field; or,
in case that the transmission mode is the second transmission mode, determining the second parameter according to a specified first information field in the first information field.

7. The method according to any one of claims 1 to 3, wherein the method further includes:
in case of meeting a first condition, determining the first parameter according to a first information field in the control information for scheduling the PUSCH;
wherein the first condition includes one or more of the following:
the control information for scheduling the PUSCH includes a specified first information field;
a bit width of the specified first information field in the control information for scheduling the PUSCH is non-zero;
the control information for scheduling the PUSCH includes at least two first information fields;
the number of SRS resources included in a specified SRS resource set is greater than 1;
the transmission mode of the PUSCH is at least corresponding to multiple SRS resource sets, and the number of SRS resources included in at least two SRS resource sets in the multiple SRS resource sets is greater than 1;
the number of antenna ports of at least one SRS resource in the specified SRS resource set is greater than 1;
the transmission mode of the PUSCH is at least corresponding to multiple SRS resource sets, and at least two SRS resource sets in the multiple SRS resource sets satisfy the following condition: the number of antenna ports of at least one SRS resource is greater than 1.

8. The method according to any one of claims 1 to 3, wherein the method further includes:
in case of meeting a second condition, determining the first parameter according to the indication information;
wherein the second condition includes one or more of the following:
the control information for scheduling the PUSCH does not include a first information field;
the control information for scheduling the PUSCH does not include a specified first information field;
the control information for scheduling the PUSCH includes a specified first information field and a bit width of the specified first information field is zero;
the control information for scheduling the PUSCH includes only one first information field with a non-zero bit width;
the control information for scheduling the PUSCH includes a first information field and a bit width of the first information field is zero;
the number of SRS resources included in a specified SRS resource set is equal to 1;
the number of SRS resources included in all SRS resource sets corresponding to the PUSCH transmission mode is equal to 1;
the number of antenna ports of all SRS resources in the specified SRS resource set is equal to 1;
the number of antenna ports of all SRS resources in all SRS resource sets corresponding to the PUSCH transmission mode is equal to 1.

9. The method according to claim 8, wherein in case that the control information includes only one first information field with the non-zero bit width, the method further includes:
determining the second parameter according to the first information field with the non-zero bit width.

10. The method according to any one of claims 5 to 8, wherein the specified first information field is any of the following:
M-th first information field; wherein M is a specified value;
a first information field with the minimum bit width among at least two first information fields;
a first information field with the maximum bit width among at least two first information fields;
only one first information field included in the control information for scheduling the PUSCH.

11. The method according to any one of claims 5 to 8, wherein the method further includes at least one of the following:
in case that the transmission mode is the first transmission mode and the number of SRS resources included in the SRS resource set associated with the specified first information field is 1, determining a bit width of the specified first information field as non-zero;
in case that the transmission mode is the second transmission mode and the number of antenna ports of all SRS resources in the SRS resource set associated with the specified first information field is 1, determining a bit width of the specified first information field as non-zero.

12. The method according to claim 1, wherein the obtaining indication information, includes at least one of the following:
obtaining the indication information according to a second information field in the control information for scheduling the PUSCH;
obtaining the indication information according to radio resource control (RRC) signaling; or,
obtaining the indication information according to media access control (MAC) signaling.

13. The method according to claim 1, wherein the first parameter includes one or more of the following: a transmission node, an SRS resource, an SRS resource set, a power control parameter, a power control parameter set, spatial-related information corresponding to the PUSCH transmission; and/or,
the second parameter includes one or more of the following: an SRS resource, an SRS resource set, a power control parameter, a power control parameter set, spatial-related information, precoding information, number of transmission layers.

14. A signal transmission method applied to a base station, comprising:
transmitting indication information to a terminal; wherein the indication information is used to indicate a transmission mode of physical uplink shared channel PUSCH; wherein the transmission mode includes a first transmission mode and/or a second transmission mode; and
indicating a first parameter and/or a second parameter to the terminal through a first information field in control information for scheduling the PUSCH; wherein the first transmission mode is corresponding to the first parameter, and the second transmission mode is corresponding to the second parameter.

15. The method according to claim 14, wherein a first characteristic of the first transmission mode and/or the second transmission mode is a characteristic associated with one or more of the following: a transmission node, a sounding reference signal (SRS) resource set, spatial- related information, a power control parameter, an SRI field in control information for scheduling the PUSCH, a TPMI field in the control information for scheduling the PUSCH, a terminal antenna panel, a power control parameter set; and/or,
a first characteristic of the first transmission mode and/or the second transmission mode is a characteristic associated with the number of one or more of the following: a transmission node, a sounding reference signal (SRS) resource set, a spatial-related parameter, a power control parameter, a power control parameter set.

16. The method according to claim 14, wherein the indicating a first parameter and/or a second parameter to the terminal through a first information field in control information for scheduling the PUSCH, includes at least one of the following:
indicating the first parameter through a state of N states of one first information field in the control information; wherein N is an integer greater than or equal to 2;
indicating the second parameter through at least one first information field in the control information.

17. The method according to claim 16, wherein when indicating the first parameter through a state of N states of one first information field in the control information, the method further includes:
indicating the first parameter by a specified first information field in the control information which includes at least two first information fields, and indicating the second parameter by another first information field other than the specified first information field in the control information which includes at least two first information fields.

18. The method according to claim 14 or 15, wherein the method further includes at least one of the following:
in case that the transmission mode is the first transmission mode, indicating the first parameter through a specified first information field in the control information for scheduling the PUSCH;
in case that the transmission mode is the second transmission mode, indicating the second parameter through a specified first information field in the control information for scheduling the PUSCH.

19. The method according to claim 14 or 15, wherein the method further includes:
indicating the first parameter by the first information field in the control information for scheduling the PUSCH when a first condition is met;
wherein the first condition includes one or more of the following:
the control information for scheduling the PUSCH includes a specified first information field;
a bit width of the specified first information field in the control information for scheduling the PUSCH is non-zero;
the control information for scheduling the PUSCH includes at least two first information fields;
the number of SRS resources included in a specified SRS resource set is greater than 1;
the transmission mode of the PUSCH is at least corresponding to multiple SRS resource sets, and the number of SRS resources included in at least two SRS resource sets in the multiple SRS resource sets is greater than 1;
the number of antenna ports of at least one SRS resource in the specified SRS resource set is greater than 1;
the transmission mode of the PUSCH is at least corresponding to multiple SRS resource sets, and at least two SRS resource sets in the multiple SRS resource sets satisfy the following condition: the number of antenna ports of at least one SRS resource is greater than 1.

20. The method according to claim 14 or 15, wherein the method further includes:
indicating the first parameter through the indication information when a second condition is met;
wherein the second condition includes one or more of the following:
the control information for scheduling the PUSCH does not include a first information field;
the control information for scheduling the PUSCH does not include a specified first information field;
the control information for scheduling the PUSCH includes a specified first information field and a bit width of the specified first information field is zero;
the control information for scheduling the PUSCH includes only one first information field with a non-zero bit width;
the control information for scheduling the PUSCH includes a first information field and a bit width of the first information field is zero;
the number of SRS resources included in a specified SRS resource set is equal to 1;
the number of SRS resources included in all SRS resource sets corresponding to the PUSCH transmission mode is equal to 1;
the number of antenna ports of all SRS resources in the specified SRS resource set is equal to 1;
the number of antenna ports of all SRS resources in all SRS resource sets corresponding to the PUSCH transmission mode is equal to 1.

21. The method according to claim 20, wherein in the case that the control information includes only one first information field with a non-zero bit width, the method further includes:
indicating the second parameter by the first information field with the non-zero bit width.

22. The method according to any one of claims 17 to 20, wherein the specified first information field is any of the following:
M-th first information field; wherein M is a specified value;
a first information field with the minimum bit width among at least two first information fields;
a first information field with the maximum bit width among at least two first information fields;
only one first information field included in the control information for scheduling the PUSCH.

23. The method according to any one of claims 17 to 20, wherein the method further includes at least one of the following:
in case that the transmission mode is the first transmission mode and the number of SRS resources included in the SRS resource set associated with the specified first information field is 1, determining a bit width of the specified first information field as non-zero;
in case that the transmission mode is the second transmission mode and the number of antenna ports of all SRS resources in the SRS resource set associated with the specified first information field is 1, determining a bit width of the specified first information field as non-zero.

24. The method according to claim 14, wherein the transmitting indication information, includes at least one of the following:
transmitting the indication information through a second information field in the control information for scheduling the PUSCH;
transmitting the indication information through radio resource control (RRC) signaling;
transmitting the indication information through medium access control (MAC) signaling.

25. The method according to claim 14, wherein the first parameter includes one or more of the following: a transmission node, an SRS resource, an SRS resource set, a power control parameter, a power control parameter set, spatial-related information corresponding to the PUSCH transmission; and/or,
the second parameter includes one or more of the following: an SRS resource, an SRS resource set, a power control parameter, a power control parameter set, spatial-related information, precoding information, number of transmission layers.

26. A terminal, comprising: a memory, a transceiver and a processor;
wherein the memory is used to store a computer program; the transceiver is used to receive and transmit data under control of the processor; the processor is used to read the computer program in the memory and perform the following steps:
obtaining indication information;
determining a transmission mode of physical uplink shared channel (PUSCH) according to the indication information; wherein the transmission mode includes a first transmission mode and/or a second transmission mode;
determining a first parameter and/or a second parameter corresponding to the transmission mode according to the transmission mode; wherein the first transmission mode is corresponding to the first parameter, and the second transmission mode is corresponding to the second parameter; and
transmitting the PUSCH according to the first parameter and/or the second parameter.

27. The terminal according to claim 26, wherein a first characteristic of the first transmission mode and/or the second transmission mode is a characteristic associated with one or more of the following: a transmission node, a sounding reference signal (SRS) resource set, spatial-related information, a power control parameter, an SRI field in control information for scheduling the PUSCH, a TPMI field in the control information for scheduling the PUSCH, a terminal antenna panel, a power control parameter set; and/or,
a first characteristic of the first transmission mode and/or the second transmission mode is a characteristic associated with the number of one or more of the following: a transmission node, a sounding reference signal (SRS) resource set, a spatial-related parameter, a power control parameter, a power control parameter set.

28. The terminal according to claim 26 or 27, wherein when determining a first parameter and/or a second parameter corresponding to the transmission mode according to the transmission mode, the processor is used to perform at least one of the following:
determining the first parameter and/or the second parameter according to a first information field in the control information for scheduling the PUSCH;
determining the first parameter according to the indication information.

29. The terminal according to claim 28, wherein when determining the first parameter and/or the second parameter according to a first information field in the control information for scheduling the PUSCH, the processor is used to perform at least one of the following:
determining the first parameter according to a state from N states of one first information field in the control information; wherein N is an integer greater than or equal to 2;
determining the second parameter according to at least one first information field in the control information.

30. The terminal according to claim 29, wherein when determining the first parameter according to a state from N states of one first information field in the control information, the processor is further used to perform:
determining the first parameter according to a specified first information field in the control information which includes at least two first information fields, and determining the second parameter according to another first information field other than the specified first information field in the control information which includes at least two first information fields.

31. The terminal according to any one of claims 26 to 28, wherein when determining a first parameter and/or a second parameter corresponding to the transmission mode according to the transmission mode, the processor is used to perform at least one of the following:
in case that the transmission mode is the first transmission mode, determining the first parameter according to a specified first information field in the first information field; or,
in case that the transmission mode is the second transmission mode, determining the second parameter according to a specified first information field in the first information field.

32. The terminal according to any one of claims 26 to 28, wherein the processor is used to perform:
in case of meeting a first condition, determining the first parameter according to a first information field in the control information for scheduling the PUSCH;
wherein the first condition includes one or more of the following:
the control information for scheduling the PUSCH includes a specified first information field;
a bit width of the specified first information field in the control information for scheduling the PUSCH is non-zero;
the control information for scheduling the PUSCH includes at least two first information fields;
the number of SRS resources included in a specified SRS resource set is greater than 1;
the transmission mode of the PUSCH is at least corresponding to multiple SRS resource sets, and the number of SRS resources included in at least two SRS resource sets in the multiple SRS resource sets is greater than 1;
the number of antenna ports of at least one SRS resource in the specified SRS resource set is greater than 1;
the transmission mode of the PUSCH is at least corresponding to multiple SRS resource sets, and at least two SRS resource sets in the multiple SRS resource sets satisfy the following condition: the number of antenna ports of at least one SRS resource is greater than 1.

33. The terminal according to any one of claims 26 to 28, wherein the processor is used to perform:
in case of meeting a second condition, determining the first parameter according to the indication information;
wherein the second condition includes one or more of the following:
the control information for scheduling the PUSCH does not include a first information field;
the control information for scheduling the PUSCH does not include a specified first information field;
the control information for scheduling the PUSCH includes a specified first information field and a bit width of the specified first information field is zero;
the control information for scheduling the PUSCH includes only one first information field with a non-zero bit width;
the control information for scheduling the PUSCH includes a first information field and a bit width of the first information field is zero;
the number of SRS resources included in a specified SRS resource set is equal to 1;
the number of SRS resources included in all SRS resource sets corresponding to the PUSCH transmission mode is equal to 1;
the number of antenna ports of all SRS resources in the specified SRS resource set is equal to 1;
the number of antenna ports of all SRS resources in all SRS resource sets corresponding to the PUSCH transmission mode is equal to 1.

34. The terminal according to claim 33, wherein in case that the control information includes only one first information field with the non-zero bit width, the processor is used to perform:
determining the second parameter according to the first information field with the non-zero bit width.

35. The terminal according to any one of claims 30 to 33, wherein the specified first information field is any of the following:
M-th first information field; wherein M is a specified value;
a first information field with the minimum bit width among at least two first information fields;
a first information field with the maximum bit width among at least two first information fields;
only one first information field included in the control information for scheduling the PUSCH.

36. The terminal according to any one of claims 30 to 33, wherein the processor is further used to perform at least one of the following:
in case that the transmission mode is the first transmission mode and the number of SRS resources included in the SRS resource set associated with the specified first information field is 1, determining a bit width of the specified first information field as non-zero;
in case that the transmission mode is the second transmission mode and the number of antenna ports of all SRS resources in the SRS resource set associated with the specified first information field is 1, determining a bit width of the specified first information field as non-zero.

37. The terminal according to claim 26, wherein when the obtaining indication information, the processor is used to perform at least one of the following:
obtaining the indication information according to a second information field in the control information for scheduling the PUSCH;
obtaining the indication information according to radio resource control (RRC) signaling; or,
obtaining the indication information according to media access control (MAC) signaling.

38. The terminal according to claim 26, wherein the first parameter includes one or more of the following: a transmission node, an SRS resource, an SRS resource set, a power control parameter, a power control parameter set, spatial-related information corresponding to the PUSCH transmission; and/or,
the second parameter includes one or more of the following: an SRS resource, an SRS resource set, a power control parameter, a power control parameter set, spatial-related information, precoding information, number of transmission layers.

39. A base station, comprising: a memory, a transceiver and a processor;
wherein the memory is used to store a computer program; the transceiver is used to receive and transmit data under control of the processor; the processor is used to read the computer program in the memory and perform the following steps:
transmitting indication information to a terminal; wherein the indication information is used to indicate a transmission mode of physical uplink shared channel PUSCH; wherein the transmission mode includes a first transmission mode and/or a second transmission mode; and
indicating a first parameter and/or a second parameter to the terminal through a first information field in control information for scheduling the PUSCH; wherein the first transmission mode is corresponding to the first parameter, and the second transmission mode is corresponding to the second parameter.

40. The base station according to claim 39, wherein a first characteristic of the first transmission mode and/or the second transmission mode is a characteristic associated with one or more of the following: a transmission node, a sounding reference signal (SRS) resource set, spatial-related information, a power control parameter, an SRI field in control information for scheduling the PUSCH, a TPMI field in the control information for scheduling the PUSCH, a terminal antenna panel, a power control parameter set; and/or,
a first characteristic of the first transmission mode and/or the second transmission mode is a characteristic associated with the number of one or more of the following: a transmission node, a sounding reference signal (SRS) resource set, a spatial-related parameter, a power control parameter, a power control parameter set.

41. The base station according to claim 39, wherein when indicating a first parameter and/or a second parameter to the terminal through a first information field in control information for scheduling the PUSCH, the processor is used to perform at least one of the following:
indicating the first parameter through a state of N states of one first information field in the control information; wherein N is an integer greater than or equal to 2;
indicating the second parameter through at least one first information field in the control information.

42. The base station according to claim 41, wherein when indicating the first parameter through a state of N states of one first information field in the control information, the processor is used to perform at least one of the following:
indicating the first parameter by a specified first information field in the control information which includes at least two first information fields, and indicating the second parameter by another first information field other than the specified first information field in the control information which includes at least two first information fields.

43. The base station according to claim 39 or 40, wherein the processor is further used to perform at least one of the following:
in case that the transmission mode is the first transmission mode, indicating the first parameter through a specified first information field in the control information for scheduling the PUSCH;
in case that the transmission mode is the second transmission mode, indicating the second parameter through a specified first information field in the control information for scheduling the PUSCH.

44. The base station according to claim 39 or 40, wherein the processor is further used to perform:
indicating the first parameter by the first information field in the control information for scheduling the PUSCH when a first condition is met;
wherein the first condition includes one or more of the following:
the control information for scheduling the PUSCH includes a specified first information field;
a bit width of the specified first information field in the control information for scheduling the PUSCH is non-zero;
the control information for scheduling the PUSCH includes at least two first information fields;
the number of SRS resources included in a specified SRS resource set is greater than 1;
the transmission mode of the PUSCH is at least corresponding to multiple SRS resource sets, and the number of SRS resources included in at least two SRS resource sets in the multiple SRS resource sets is greater than 1;
the number of antenna ports of at least one SRS resource in the specified SRS resource set is greater than 1;
the transmission mode of the PUSCH is at least corresponding to multiple SRS resource sets, and at least two SRS resource sets in the multiple SRS resource sets satisfy the following condition: the number of antenna ports of at least one SRS resource is greater than 1.

45. The base station according to claim 39 or 40, wherein the processor is further used to perform:
indicating the first parameter through the indication information when a second condition is met;
wherein the second condition includes one or more of the following:
the control information for scheduling the PUSCH does not include a first information field;
the control information for scheduling the PUSCH does not include a specified first information field;
the control information for scheduling the PUSCH includes a specified first information field and a bit width of the specified first information field is zero;
the control information for scheduling the PUSCH includes only one first information field with a non-zero bit width;
the control information for scheduling the PUSCH includes a first information field and a bit width of the first information field is zero;
the number of SRS resources included in a specified SRS resource set is equal to 1;
the number of SRS resources included in all SRS resource sets corresponding to the PUSCH transmission mode is equal to 1;
the number of antenna ports of all SRS resources in the specified SRS resource set is equal to 1;
the number of antenna ports of all SRS resources in all SRS resource sets corresponding to the PUSCH transmission mode is equal to 1.

46. The base station according to claim 45, wherein in the case that the control information includes only one first information field with a non-zero bit width, the processor is further used to perform:
indicating the second parameter by the first information field with the non-zero bit width.

47. The base station according to any one of claims 42 to 45, wherein the specified first information field is any of the following:
M-th first information field; wherein M is a specified value;
a first information field with the minimum bit width among at least two first information fields;
a first information field with the maximum bit width among at least two first information fields;
only one first information field included in the control information for scheduling the PUSCH.

48. The base station according to any one of claims 42 to 45, wherein the processor is further used to perform at least one of the following:
in case that the transmission mode is the first transmission mode and the number of SRS resources included in the SRS resource set associated with the specified first information field is 1, determining a bit width of the specified first information field as non-zero;
in case that the transmission mode is the second transmission mode and the number of antenna ports of all SRS resources in the SRS resource set associated with the specified first information field is 1, determining a bit width of the specified first information field as non-zero.

49. The base station according to claim 39, wherein when transmitting indication information, the processor is used to perform at least one of the following:
transmitting the indication information through a second information field in the control information for scheduling the PUSCH;
transmitting the indication information through radio resource control (RRC) signaling;
transmitting the indication information through medium access control (MAC) signaling.

50. The base station according to claim 39, wherein the first parameter includes one or more of the following: a transmission node, an SRS resource, an SRS resource set, a power control parameter, a power control parameter set, spatial-related information corresponding to the PUSCH transmission; and/or,
the second parameter includes one or more of the following: an SRS resource, an SRS resource set, a power control parameter, a power control parameter set, spatial-related information, precoding information, number of transmission layers.

51. A signal transmission apparatus applied to a terminal, comprising:
an information obtaining unit configured to obtain indication information;
a first determining unit configured to determine a transmission mode of physical uplink shared channel (PUSCH) according to the indication information; wherein the transmission mode includes a first transmission mode and/or a second transmission mode;
a second determining unit configured to determine a first parameter and/or a second parameter corresponding to the transmission mode according to the transmission mode; wherein the first transmission mode is corresponding to the first parameter, and the second transmission mode is corresponding to the second parameter; and
a transmission unit configured to transmit the PUSCH according to the first parameter and/or the second parameter.

52. The signal transmission apparatus according to claim 51, wherein a first characteristic of the first transmission mode and/or the second transmission mode is a characteristic associated with one or more of the following: a transmission node, a sounding reference signal (SRS) resource set, spatial- related information, a power control parameter, an SRI field in control information for scheduling the PUSCH, a TPMI field in the control information for scheduling the PUSCH, a terminal antenna panel, a power control parameter set; and/or,
a first characteristic of the first transmission mode and/or the second transmission mode is a characteristic associated with the number of one or more of the following: a transmission node, a sounding reference signal (SRS) resource set, a spatial-related parameter, a power control parameter, a power control parameter set.

53. The signal transmission apparatus according to claim 51 or 52, wherein when determining a first parameter and/or a second parameter corresponding to the transmission mode according to the transmission mode, the second determining unit is used to perform at least one of the following:
determining the first parameter and/or the second parameter according to a first information field in the control information for scheduling the PUSCH;
determining the first parameter according to the indication information.

54. The signal transmission apparatus according to claim 53, wherein when determining the first parameter and/or the second parameter according to a first information field in the control information for scheduling the PUSCH, the second determining unit is used to perform at least one of the following:
determining the first parameter according to a state from N states of one first information field in the control information; wherein N is an integer greater than or equal to 2;
determining the second parameter according to at least one first information field in the control information.

55. The signal transmission apparatus according to claim 54, wherein when determining the first parameter according to a state from N states of one first information field in the control information, the second determining unit is further used to perform:
determining the first parameter according to a specified first information field in the control information which includes at least two first information fields, and determining the second parameter according to another first information field other than the specified first information field in the control information which includes at least two first information fields.

56. The signal transmission apparatus according to any one of claims 51 to 54, wherein when determining a first parameter and/or a second parameter corresponding to the transmission mode according to the transmission mode, the second determining unit is used to perform at least one of the following:
in case that the transmission mode is the first transmission mode, determining the first parameter according to a specified first information field in the first information field; or,
in case that the transmission mode is the second transmission mode, determining the second parameter according to a specified first information field in the first information field.

57. The signal transmission apparatus according to any one of claims 51 to 54, wherein the second determining unit is used to perform:
in case of meeting a first condition, determining the first parameter according to a first information field in the control information for scheduling the PUSCH;
wherein the first condition includes one or more of the following:
the control information for scheduling the PUSCH includes a specified first information field;
a bit width of the specified first information field in the control information for scheduling the PUSCH is non-zero;
the control information for scheduling the PUSCH includes at least two first information fields;
the number of SRS resources included in a specified SRS resource set is greater than 1;
the transmission mode of the PUSCH is at least corresponding to multiple SRS resource sets, and the number of SRS resources included in at least two SRS resource sets in the multiple SRS resource sets is greater than 1;
the number of antenna ports of at least one SRS resource in the specified SRS resource set is greater than 1;
the transmission mode of the PUSCH is at least corresponding to multiple SRS resource sets, and at least two SRS resource sets in the multiple SRS resource sets satisfy the following condition: the number of antenna ports of at least one SRS resource is greater than 1.

58. The signal transmission apparatus according to any one of claims 51 to 54, wherein the second determining unit is used to perform:
in case of meeting a second condition, determining the first parameter according to the indication information;
wherein the second condition includes one or more of the following:
the control information for scheduling the PUSCH does not include a first information field;
the control information for scheduling the PUSCH does not include a specified first information field;
the control information for scheduling the PUSCH includes a specified first information field and a bit width of the specified first information field is zero;
the control information for scheduling the PUSCH includes only one first information field with a non-zero bit width;
the control information for scheduling the PUSCH includes a first information field and a bit width of the first information field is zero;
the number of SRS resources included in a specified SRS resource set is equal to 1;
the number of SRS resources included in all SRS resource sets corresponding to the PUSCH transmission mode is equal to 1;
the number of antenna ports of all SRS resources in the specified SRS resource set is equal to 1;
the number of antenna ports of all SRS resources in all SRS resource sets corresponding to the PUSCH transmission mode is equal to 1.

59. The signal transmission apparatus according to claim 58, wherein in case that the control information includes only one first information field with the non-zero bit width, the second determining unit is used to perform:
determining the second parameter according to the first information field with the non-zero bit width.

60. The signal transmission apparatus according to any one of claims 55 to 58, wherein the specified first information field is any of the following:
M-th first information field; wherein M is a specified value;
a first information field with the minimum bit width among at least two first information fields;
a first information field with the maximum bit width among at least two first information fields;
only one first information field included in the control information for scheduling the PUSCH.

61. The signal transmission apparatus according to any one of claims 55 to 58, wherein the second determining unit is further used to perform at least one of the following:
in case that the transmission mode is the first transmission mode and the number of SRS resources included in the SRS resource set associated with the specified first information field is 1, determining a bit width of the specified first information field as non-zero;
in case that the transmission mode is the second transmission mode and the number of antenna ports of all SRS resources in the SRS resource set associated with the specified first information field is 1, determining a bit width of the specified first information field as non-zero.

62. The signal transmission apparatus according to claim 51, wherein when the obtaining indication information, the second determining unit is used to perform at least one of the following:
obtaining the indication information according to a second information field in the control information for scheduling the PUSCH;
obtaining the indication information according to radio resource control (RRC) signaling; or,
obtaining the indication information according to media access control (MAC) signaling.

63. The signal transmission apparatus according to claim 51, wherein the first parameter includes one or more of the following: a transmission node, an SRS resource, an SRS resource set, a power control parameter, a power control parameter set, spatial-related information corresponding to the PUSCH transmission; and/or,
the second parameter includes one or more of the following: an SRS resource, an SRS resource set, a power control parameter, a power control parameter set, spatial-related information, precoding information, number of transmission layers.

64. A signal transmission apparatus applied to a base station, comprising:
a transmission unit configured to transmit indication information to a terminal; wherein the indication information is used to indicate a transmission mode of physical uplink shared channel PUSCH;
wherein the transmission mode includes a first transmission mode and/or a second transmission mode; and
a first parameter and/or a second parameter is indicated to the terminal through a first information field in control information for scheduling the PUSCH; wherein the first transmission mode is corresponding to the first parameter, and the second transmission mode is corresponding to the second parameter.

65. The signal transmission apparatus according to claim 64, wherein a first characteristic of the first transmission mode and/or the second transmission mode is a characteristic associated with one or more of the following: a transmission node, a sounding reference signal (SRS) resource set, spatial- related information, a power control parameter, an SRI field in control information for scheduling the PUSCH, a TPMI field in the control information for scheduling the PUSCH, a terminal antenna panel, a power control parameter set; and/or,
a first characteristic of the first transmission mode and/or the second transmission mode is a characteristic associated with the number of one or more of the following: a transmission node, a sounding reference signal (SRS) resource set, a spatial-related parameter, a power control parameter, a power control parameter set.

66. The signal transmission apparatus according to claim 64, wherein when indicating a first parameter and/or a second parameter to the terminal through a first information field in control information for scheduling the PUSCH, the transmission unit is used to perform at least one of the following:
indicating the first parameter through a state of N states of one first information field in the control information; wherein N is an integer greater than or equal to 2;
indicating the second parameter through at least one first information field in the control information.

67. The signal transmission apparatus according to claim 66, wherein when indicating the first parameter through a state of N states of one first information field in the control information, the transmission unit is used to perform at least one of the following:
indicating the first parameter by a specified first information field in the control information which includes at least two first information fields, and indicating the second parameter by another first information field other than the specified first information field in the control information which includes at least two first information fields.

68. The signal transmission apparatus according to claim 64 or 65, wherein the transmission unit is further used to perform at least one of the following:
in case that the transmission mode is the first transmission mode, indicating the first parameter through a specified first information field in the control information for scheduling the PUSCH;
in case that the transmission mode is the second transmission mode, indicating the second parameter through a specified first information field in the control information for scheduling the PUSCH.

69. The signal transmission apparatus according to claim 64 or 65, wherein the transmission unit is further used to perform:
indicating the first parameter by the first information field in the control information for scheduling the PUSCH when a first condition is met;
wherein the first condition includes one or more of the following:
the control information for scheduling the PUSCH includes a specified first information field;
a bit width of the specified first information field in the control information for scheduling the PUSCH is non-zero;
the control information for scheduling the PUSCH includes at least two first information fields;
the number of SRS resources included in a specified SRS resource set is greater than 1;
the transmission mode of the PUSCH is at least corresponding to multiple SRS resource sets, and the number of SRS resources included in at least two SRS resource sets in the multiple SRS resource sets is greater than 1;
the number of antenna ports of at least one SRS resource in the specified SRS resource set is greater than 1;
the transmission mode of the PUSCH is at least corresponding to multiple SRS resource sets, and at least two SRS resource sets in the multiple SRS resource sets satisfy the following condition: the number of antenna ports of at least one SRS resource is greater than 1.

70. The signal transmission apparatus according to claim 64 or 65, wherein the transmission unit is further used to perform:
indicating the first parameter through the indication information when a second condition is met;
wherein the second condition includes one or more of the following:
the control information for scheduling the PUSCH does not include a first information field;
the control information for scheduling the PUSCH does not include a specified first information field;
the control information for scheduling the PUSCH includes a specified first information field and a bit width of the specified first information field is zero;
the control information for scheduling the PUSCH includes only one first information field with a non-zero bit width;
the control information for scheduling the PUSCH includes a first information field and a bit width of the first information field is zero;
the number of SRS resources included in a specified SRS resource set is equal to 1;
the number of SRS resources included in all SRS resource sets corresponding to the PUSCH transmission mode is equal to 1;
the number of antenna ports of all SRS resources in the specified SRS resource set is equal to 1;
the number of antenna ports of all SRS resources in all SRS resource sets corresponding to the PUSCH transmission mode is equal to 1.

71. The signal transmission apparatus according to claim 70, wherein in the case that the control information includes only one first information field with a non-zero bit width, the transmission unit is further used to perform:
indicating the second parameter by the first information field with the non-zero bit width.

72. The signal transmission apparatus according to any one of claims 67 to 70, wherein the specified first information field is any of the following:
M-th first information field; wherein M is a specified value;
a first information field with the minimum bit width among at least two first information fields;
a first information field with the maximum bit width among at least two first information fields;
only one first information field included in the control information for scheduling the PUSCH.

73. The signal transmission apparatus according to any one of claims 67 to 70, wherein the transmission unit is further used to perform at least one of the following:
in case that the transmission mode is the first transmission mode and the number of SRS resources included in the SRS resource set associated with the specified first information field is 1, determining a bit width of the specified first information field as non-zero;
in case that the transmission mode is the second transmission mode and the number of antenna ports of all SRS resources in the SRS resource set associated with the specified first information field is 1, determining a bit width of the specified first information field as non-zero.

74. The signal transmission apparatus according to claim 64, wherein when transmitting indication information, the transmission unit is used to perform at least one of the following:
transmitting the indication information through a second information field in the control information for scheduling the PUSCH;
transmitting the indication information through radio resource control (RRC) signaling;
transmitting the indication information through medium access control (MAC) signaling.

75. The signal transmission apparatus according to claim 64, wherein the first parameter includes one or more of the following: a transmission node, an SRS resource, an SRS resource set, a power control parameter, a power control parameter set, spatial-related information corresponding to the PUSCH transmission; and/or,
the second parameter includes one or more of the following: an SRS resource, an SRS resource set, a power control parameter, a power control parameter set, spatial-related information, precoding information, number of transmission layers.

76. A computer-readable storage medium, comprising: a computer program stored thereon; wherein the computer program is used to cause a computer to execute the signal transmission method according to any one of claims 1 to 13, or to cause the computer to execute the signal transmission method according to any one of claims 14 to 25.
